(19) Europäisches Patentamt / European Patent Office / Office européen des brevets

(11) **EP 2 012 425 B1**

(12) **EUROPEAN PATENT SPECIFICATION**

(45) Date of publication and mention
of the grant of the patent:
**30.12.2009 Bulletin 2009/53**

(51) Int Cl.:
*H02P 21/00* (2006.01)     *H02P 6/00* (2006.01)
*H02P 6/18* (2006.01)

(21) Application number: **08159088.7**

(22) Date of filing: **26.06.2008**

(54) **Synchronous motor control device and synchronous motor control method**

Vorrichtung und Verfahren zur Synchronmotorsteuerung

Dispositif de commande de moteur synchrone et procédé de commande de moteur synchrone

(84) Designated Contracting States:
**DE FR GB**

(30) Priority: **04.07.2007 JP 2007176399**

(43) Date of publication of application:
**07.01.2009 Bulletin 2009/02**

(73) Proprietor: **AISIN SEIKI KABUSHIKI KAISHA**
**Kariya-shi, Aichi 448-8650 (JP)**

(72) Inventors:
• **Matsuo, Noriko**
**Kariya-shi Aichi 448-8650 (JP)**

• **Inagaki, Hiroyuki**
**Kariya-shi Aichi 448-8650 (JP)**

(74) Representative: **TBK-Patent**
**Bavariaring 4-6**
**80336 München (DE)**

(56) References cited:
**JP-A- 3 256 587     JP-A- 9 215 398**
**JP-A- 2004 282 873     US-A1- 2007 085 508**

**Description**

FIELD OF THE INVENTION

The present invention relates to a synchronous motor control device and a synchronous motor control method.

BACKGROUND

A so-called 'vector-control' is known as a method for controlling a synchronous motor. In the vector-control disclosed in, for example JP2006-320039A, motor current applied through each of three phases of the synchronous motor is coordinate-transformed into a vector component that is transformable into vector components directed along a direct axis (hereinafter referred to as a s-axis) corresponding to a direction of a magnetic field, generated by permanent magnets at a rotor, and a quadrature axis (hereinafter referred to as a q-axis) orthogonal to the d-axis, and then a feedback control is executed.

Conventionally, when the synchronous motor structure is modified in order to increase output torque, magnetic flux concentration occurs, thereby causing localized magnetic saturation. The magnetic saturation phenomenon caused by the synchronous motor structure appears as a disturbance against a voltage equation for calculating a motor driving voltage in the vector-control, and becomes a factor for torque fluctuation occurring at the synchronous motor. The reduction of voltage distortion in an object of document JP 03256587. Further, in a case of the motor using the permanent magnet, the magnetic flux of the permanent magnet remains even when the current is not applied to the stators. As a result, a torque ripple is generated between the permanent magnet and stator cores. Theoretically, the torque ripple appears as a ripple corresponding to a common multiple of a number of poles of the permanent magnet and a number of salient poles of the stator. The torque fluctuation factor such as the disturbance, the ripple and the like appears as a disturbance, a ripple and the like on which a high-order harmonic is additionally superimposed. The high-order harmonic has a higher frequency than a carrier frequency used for a pulse with modulation control (PWM control) as a conventional motor control. Hence, elimination of the high-order harmonic by the feedback control is difficult. The reduction of current harmonies due to saturation is an object of document JP 09215398.

A need thus exists to provide a synchronous motor control device and a synchronous motor control method that appropriately control a torque fluctuation factor, including a high-order harmonic, of the synchronous motor to which a vector-control is executed.

SUMMARY OF THE INVENTION

The invention is precisely defined in device claim 1 and corresponding method claim 4. The dependent claims recite advantageous embodiments of the invention.

BRIEF DESCRIPTION OF THE DRAWINGS

The foregoing and additional features and characteristics of the present invention will become more apparent from the following detailed description considered with the reference to the accompanying drawings, wherein:

Fig. 1 is a block diagram schematically illustrating a configuration example of a synchronous motor control device according to a first embodiment;

Fig. 2 is a flowchart illustrating an example of the controlling procedure of the synchronous motor;

Fig. 3A is a view for explaining a principle of a coordinate transformation;

Fig. 3B is a view for explaining the principle of the coordinate transformation;

Fig. 4 is a vector diagram for explaining a phase angle of armature currents;

Fig. 5 is a view illustrating a state transition diagram for explaining a process for obtaining current commands;

Fig. 6 is a waveform chart indicating induced voltages, including disturbance voltages, of the synchronous motor;

Fig. 7 is a waveform chart indicating a d-axis and q-axis currents, including the disturbance currents, of the synchronous motor;

Fig. 8 is a flowchart illustrating an example of a disturbance voltage estimation process on the d-axis and q-axis;

Fig. 9 is a state transition diagram for explaining a process for calculating voltage commands;

Fig. 10 is a waveform chart illustrating the d-axis and q-axis currents of the synchronous motor obtained after the disturbance voltages on the d-axis and q-axis are suppressed;

Fig. 11A is a d-axis disturbance voltage table;

Fig. 11B is a q-axis disturbance voltage table;

Fig. 12 is a flowchart illustrating another example of the disturbance voltage estimation process on the d-axis and q-axis;

Fig. 13 is a block diagram schematically illustrating another configuration example of the synchronous motor control device according to a second embodiment;

Fig. 14 is a flowchart illustrating another example of the controlling procedure of the synchronous motor;

Fig. 15 is a flowchart illustrating an example of a disturbance voltage estimation process on three-phases;

Fig. 16 is a state transition diagram for explaining a process of calculating three-phase voltage commands;

Fig. 17 is a flowchart illustrating another example of the disturbance voltage estimation process on the three-phases;

Fig. 18 illustrates one of three-phase disturbance voltage tables; and

Fig. 19 is a waveform chart illustrating the d-axis and q-axis currents of the synchronous motor after the disturbance voltages on the three-phases are suppressed.

DETAILED DESCRIPTION

[First Embodiment]

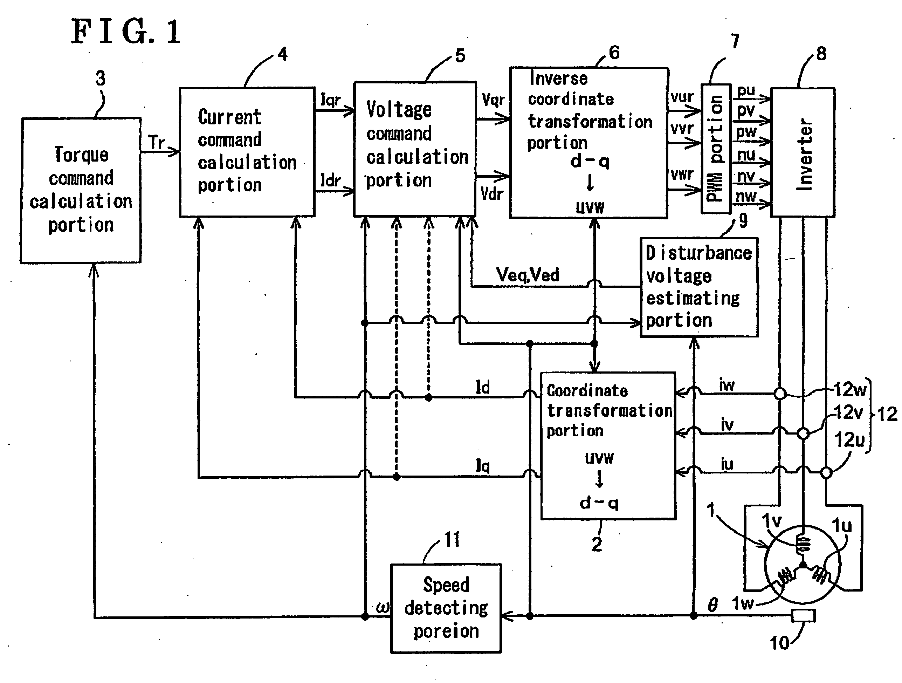

A first embodiment of a synchronous motor control device and a synchronous motor control method will be described below in accordance with the attached drawings. Fig. 1 is a block diagram schematically illustrating a configuration example of the synchronous motor control device. A motor 1 is a three-phase synchronous motor. The motor 1 includes a rotor having permanent magnets and a stator that generates a magnetic field for applying a rotational force to the rotor. The stator includes stator coils (armature coils) 1u, 1v and 1w that form U-phase, V-phase and W-phase, respectively. One end of each of the stator coils 1u, 1v and 1w is commonly connected at an electrical neutral point so as to form a Y-connection (a star-connection). The other end of each of the stator coils 1u, 1v and 1w is connected to an inverter 8 that will be described below. As illustrated in Fig. 1, the synchronous motor control device of the first embodiment energises the stator coils 1u, 1v and 1w that form the three-phases via the inverter 8 in response to a target torque applied to the stator coils 1u, 1v and 1w from a torque command calculation portion 3, and then, a rotating magnetic field is generated, thereby driving the synchronous motor 1.

The synchronous motor control device includes functional portions such as a coordinate transformation portion 2, a current command calculation portion 4, a voltage command calculation portion 5, an inverse coordinate transformation portion 6, a pulse width modulating portion 7 (hereinafter referred to as a PWM portion 7), a disturbance voltage estimating portion 9, a speed detecting portion 11 and the like. The functional portions including the torque calculation portion 3 are configured with, for example, a microcomputer and the like. Therefore, the functional portions do not need to be configured to be physically independent as long as each of the functional portions is configured to be achievable by means of a program and the like. The functional portions may be configured by combining electronic circuits such as a logic circuit, application specific standard product (ASSP) and the like. Details of each of the functional portions will be described below.

The inverter 8 that drives the motor 1 converts direct current voltage (DC voltage) into alternating current voltage (AD voltage) based on inverter driving signals pu, pv, pw, nu, nv and nw. The inverter 8 is configured with a bridge circuit whose details will be described below. Two witching elements are arranged in series between an electric power source VDC and a ground, i.e. between a positive side and a negative side of a direct current port source. In other words, a series circuit having a high-side switch at the positive side and a low-side switch at the negative side is formed. The bridge circuit is formed by three pairs of series circuits described above, being connected in parallel so as to correspond to the U-phase, the V-phase and the W-phase, respectively. The other end of each of the stator coils 1u, 1v and 1w is connected to a connecting point of the high-side switch and the low-side switch of each of the series circuits. The inverter driving signals pu, pv and pw are signals for driving high-side switches of the U-phase, V-phase and W-phase, respectively. The inverter driving signals nu, nv and nw are signals for driving low-side switches of the U-phase, V-phase and W-phase, respectively.

For example, a power metal-oxide-semiconductor-field-effect-transistor (a power MOSFET, which is hereinafter referred to simply as FET for convenience) is used for the switching elements. In a case where n-channeled FET is used for both of the high-side switch and the low-side switch, a boost circuit such as a charge pump is additionally provided. The inverter driving signals pu, pv and pw, that drive the high-side switches respectively, are boosted by the boost circuit. A flywheel diode, which is also referred to as a free-wheel diode and is configured to be connected in parallel with the FET, is provided at each of the FET. Additionally, the flywheel diode may be included into the switching elements such as the FET. Further, other semiconductor elements such as a power transistor, an intelligent power device (IPD), an intelligent power module (IPM) and the like my be used as the switching elements.

A current sensor 12 (12u, 12v, 12w) that serves as a current detecting portion is provided on lines connecting the inverter 8 and the stator coils 1u, 1v and 1w. The current sensor 12 detects the motor current applied to each of the three-phase stator coils 1u, 1v and 1w. In this embodiment, currents iu, iv and iv applied to the three-phase stator coils 1u, 1v and 1w respectively balance each other. In other words, because a sum of instantaneous values of the currents iu, iv and iw of the stator coils 1u, 1v and 1w, respectively, is zero, the current of two phases may be detected and then the current of the rest may be estimated by a calculation at the coordinate transformation portion 2 and the like. In this case, the coordinate transformation portion 2 serves also as a part of the current detecting portion.

The motor 1 is provided with a rotational angle sensor (rotation detecting portion) such as a resolver 10 for detecting a rotational angle (mechanical angle) of the rotor of the motor 1. The resolver 10 is set depending on the number of poles (number of pairing poles) of the rotor of the motor 1. The resolver 10 converts the rotational angle of the rotor into an electrical angle $\theta$ and outputs a signal corresponding to the electrical angle $\theta$. The speed detecting portion 11 detects number of rotations of the motor 1 (angular velocity $\omega$) based on the output of the resolver 10.

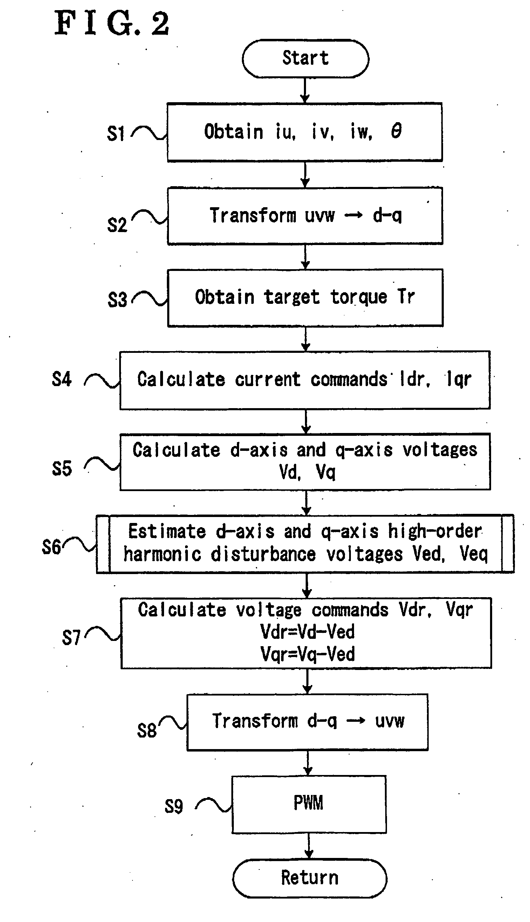

Each function of the coordinate transformation portion 2, the current command calculation portion 4, the voltage command calculation portion 5, the inverse coordinate transformation portion 6, the disturbance estimating portion 9 and the like will be described below in accordance also with a flowchart illustrated in Fig. 2. The synchronous motor control device of the first embodiment is provided with a vector-control portion that executes a vector-control. The vector-control portion is configured at least with the coordinate transformation portion 2, the current command calculation portion 4, the voltage command calculation portion 5 and the inverse coordinate transformation portion 6.

The vector-control portion obtains the motor currents iu, iv and iw of the motor 1 and the rotational angle (the electrical angle $\theta$) of the rotor (S1 in Fig. 2), obtained in the above-mentioned manner. The coordinate transformation portion 2 is a functional portion for coordinate-transforming the motor currents iu, iv and iw on the basis of the electrical angle $\theta$. More specifically, the coordinate transformation portion 2 coordinate-transforms the motor currents iu, iv and iw into a vector component Id of a direct axis (hereinafter referred to as a d-axis), which corresponds to a direction where a magnetic field generated by the permanent magnets that is provided at the rotor of the motor 1, and a vector component Iq of a quadrature axis (hereinafter referred to as a q-axis) that is orthogonal to the d-axis (S2 in Fig. 2: coordinate transformation process). Hereinafter, the vector component Id of the d-axis is referred to as the d-axis vector component Id, and the vector component Iq of the q-axis is referred to as the q-axis vector component Iq.

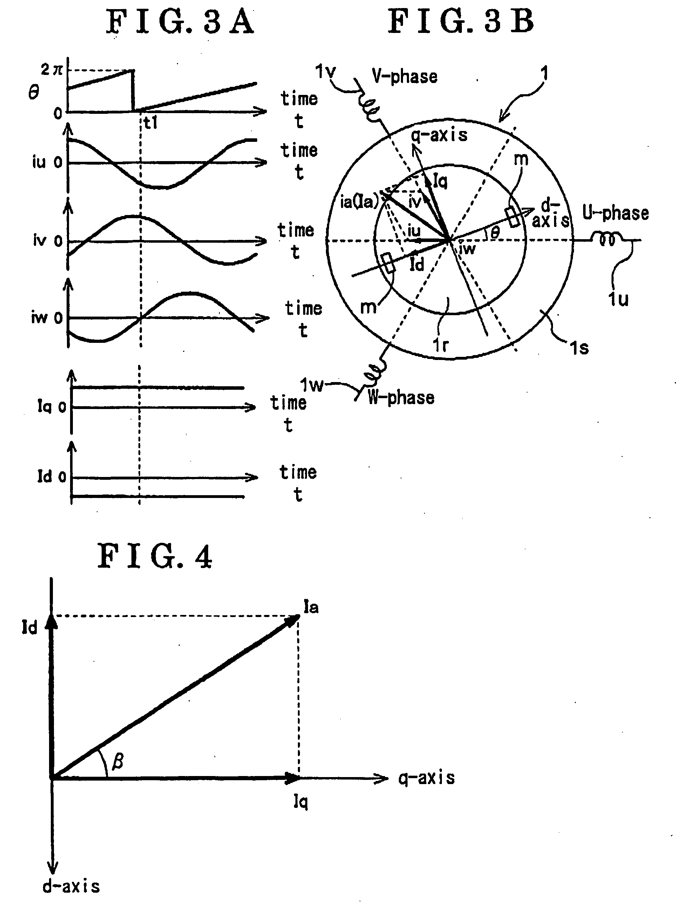

Fig. 3 is a view for explaining a principle of the coordinate transformation. In Fig. 3. a rotor 1r having bipolar (a pair of poles) permanent magnets m is employed, and a rotational angle of the rotor 1r corresponds to the electrical angle 6. Fig. 3A is a waveform chart illustrating a relationship between current waveforms and the electrical angle $\theta$. In this embodiment, the current waveforms correspond to positions of the magnetic poles. Fig. 3B is a view for explaining a positional relationship between the rotor 1r and a stator 1s at time t1 in Fig. 3A, and further, Fig. 3B illustrates current vectors before and after an execution of the coordinate transformation. In Fig. 3B, the rotational angle (the electrical angle $\theta$) is illustrated as a position of magnetic pole of the rotor 1r with reference to a salient position of the U-phase of the stator 1s.

As illustrated in Fig. 3B, a direction of a magnetic field generated by the permanent magnets m arranged at the rotor 1r is represented as the d-axis, and a direction that is orthogonal to the d-axis is represented as the q-axis. As illustrated in Fig. 3A, a torque is generated by applying the sine wave three-phase alternating currents iu, iv and iw to the stator coils 1u, 1v and 1w, respectively, in response to the position of the poles of the rotor 1r. A current vector ia indicating a sum of armature currents becomes a sum of vectors of the three-phase currents iu, iv and iw, as illustrated in Fig. 3B when the rotor 1r is positioned at the position to form magnetic pole $\theta$ (= the electrical angle $\theta$) at the time t1 in Fig. 3A. In this embodiment, Fig. 3B illustrates the current vector ia as a vectorial sum of the current iu of the U-phase and the current iv of the V-phase because the current of the W-phase is zero. When the current vector ia (=Ia) generated in a case where the rotor 1r is positioned at the position to form the magnetic pole $\theta$ is decomposed into vectors relative to the d-axis and the q-axis, the d-axis current Id and the q-axis current Iq are obtained. For example, as represented in equations 1 and 2, the motor currents iu, iv and iw are coordinate-transformed into the d-axis current Id and the q-axis current Iq.

$$\text{Equation 1:}\quad Id = \sqrt{\frac{2}{3}}\left(iu\cdot\cos\theta + iv\cdot\cos\left(\theta - \frac{2}{3}\pi\right) + iw\cdot\cos\left(\theta + \frac{2}{3}\pi\right)\right)$$

$$\text{Equation 2:}\quad Iq = -\sqrt{\frac{2}{3}}\left(iu\cdot\sin\theta + iv\cdot\sin\left(\theta - \frac{2}{3}\pi\right) + iw\cdot\sin\left(\theta + \frac{2}{3}\pi\right)\right)$$

As illustrated in Fig. 3A, the d-axis current Id and the q-axis current Iq, obtained by the coordinate transformation, are set to be constant without being influenced by the electrical angle θ. The d-axis current Id and the q-axis current Iq correspond to a field current and an armature current, respectively, of a direct current motor. Therefore, by executing a vector transformation, a method of controlling the direct current motor having accumulated technology may be adapted to a synchronous motor. This represents one of advantages of vector-controlling the synchronous motor.

Specifically, in an interior permanent magnet synchronous motor (hereinafter referred to as an IPMSM), inductances corresponding to the stator coils 1u, 1v and 1w, respectively, change in response to a positional relationship between each of the corresponding stator coils 1u, 1v and 1w and the rotor 1r, i.e. a positional relationship between each of the corresponding stator coils 1u, 1v and 1w and the position of the magnetic poles. When the rotor 1r is rotated so that any one of the stator coils 1u, 1v and 1w is positioned so as to correspond to the direction of the d-axis that corresponds to the direction of the magnetic poles, a magnetic path of the any one of the stator coils 1u, 1v and 1w is blocked because the stator coils 1u, 1v and 1w have magnetic resistance proportional to an inverse of magnetic permeability of the permanent magnets. On the other hand, when the rotor 1 is rotated so that any one of the stator coils 1u, 1v and 1w is positioned so as to correspond to the direction of the q-axis, the magnetic path of the any one of the stator coils 1u, 1v and 1w is less likely to be blocked because the currents iu, iv and iw pass through a soft magnetic material such as a silicon steel having a large magnetic permeability and a value of the magnetic resistance of the stator coils 1u, 1v and 1w dramatically reduced compared to a case where the currents iu, iv and iw pass through the permanent magnets. As a result, a q-axis inductance Ld has a larger value than a d-axis inductance Ld. As positions of the d-axis and the q-axis relative to the stator coils 1u, 1v and 1w change in response to the position of the magnetic poles, the d-axis inductance Ld and the q-axis inductance Lq relative to the stator coils 1u, 1v and 1w change.

Therefore, in addition to a magnetic torque (main torque) generate by permanent magnets, a reluctance torque is generated due to a difference between the d-axis inductance Ld and the q-axis inductance Lq. In a case where a surface permanent magnet synchronous motor (hereinafter referred to as a SPMSM or a surface PMSM) that does not actively use the reluctance torque is employed, motor working efficiency is enhanced when the SPMSM is controlled with the d-axis vector component Id as zero (Id=0). However, in a case where the IPMSM is employed and reluctance torque is also utilized, the motor working efficiency is enhanced when the IPMSM is controlled with the d-axis vector component Id as a value other than zero (Id≠0). In the IPSMS, an operational point at which a maximum motor working efficiency is achieved changes in response to a current phase angle β formed by the d-axis current Id and the q-axis current Iq. The current phase angle β is an angle represented by the following equation (equation 3) and in Fig. 4.

$$\text{Equation 3:} \quad \beta = \tan^{-1}\left(-\frac{Id}{Iq}\right)$$

A total torque of the motor 1 is represented by the following equation (equation 4) where Pn indicates number of pairing poles, ψa indicates an interlinkage magnetic flux of the armatures, ia indicates the armature currents, Ld indicates the d-axis inductance, Lq indicates the q-axis inductance and β indicates the current phase angle.

$$\text{Equation 4:} \quad T = Pn\left\{\psi a \cdot Ia \cdot \cos\beta + \frac{1}{2}(Lq - Ld)Ia^2 \cdot \sin(2\beta)\right\}$$

In equation 4, the magnet torque is represented by the first term within the braces, and the reluctance torque is represented by the second term. Additionally, in view of equation 3 and Fig. 4, the following equations (equations 5 to 7) are apparently satisfied. Hence, torque equation 4 is also represented by equation 8.

$$\text{Equation 5:} \quad Ia^2 = Id^2 + Iq^2$$

$$\text{Equation 6:} \quad Id = Ia \cdot \sin\beta$$

Equation 7: $Iq = Ia \cdot \cos\beta$

Equation 8: $T = Pn\{\psi a \cdot Iq + (Lq - Ld)Id \cdot Iq\}$

As described above, the armature current Ia includes the d-axis current Id and the q-axis current Iq. Thus, each of the torque equations represented in equations 4 and 8 is defined as an equation that represents the torque of the motor 1 by using the interlinkage magnetic flux $\psi a$, the d-axis inductance Ld, q-axis inductance Lq, d-axis current Id and the q-axis current Iq. In other words, a torque T of the motor 1 is set to any desired value by controlling the d-axis current Id and the q-axis current Iq.

The torque command calculation portion 3 is the functional portion that calculates the total torque T necessary for the motor 1 and outputs a torque command Tr (target torque) to the current command calculation portion 4. When the motor 1 is adapted to electric appliances, for example, a washing machine, a necessary torque is calculated on the basis of an operation phase for washing, dehydration and the like, and an amount of the laundry and the like. In a case where the motor 1 is adapted as a driving device of, for example, an electric vehicle, a hybrid vehicle and a train, a necessary torque is calculated on the basis of command input via an accelerator, a brake and the like, and detection results of a vehicle speed sensor and the like. Further, a feedback control using the angular velocity $\omega$ of the motor 1, detected by the speed detecting portion 11, is also executed.

The current command calculation portion 4 obtains the torque command Tr (target torque) calculated by the torque command calculation portion 3 (S3 in Fig. 2). Then, the current command calculation portion 4 calculates a d-axis current command Idr and a q-axis current command Iqr on the basis of the obtained torque command Tr (S4 in Fig. 2: current command calculation process). For example, the torque equation represented by equation 2 may be transformed into an equation representing the armature current Ia. The current command calculation portion 4 may calculate the d-axis current command Idr and the q-axis current command Iqr by solving the transformed torque equation by substituting the torque command Tr or other parameters therein, and then by decomposing the armature current Ia into the d-axis vector and the q-axis vector on the basis of the phase angle $\beta$. The d-axis current command Idr and the q-axis current command Iqr may be calculated from equation 8.

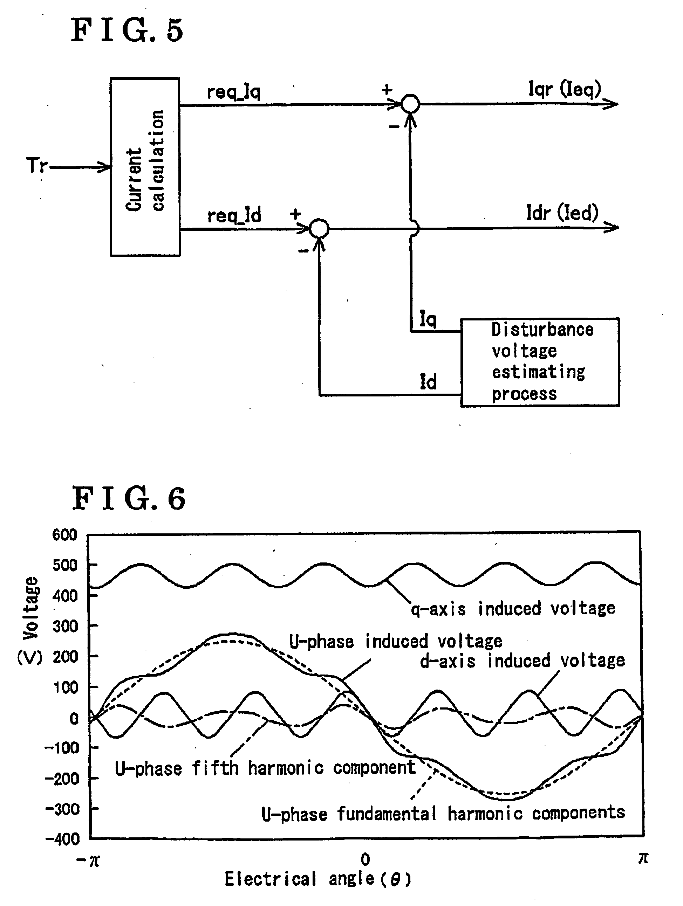

Alternatively, as illustrated in Fig. 5, a d-axis current deviation Ied and a q-axis current deviation Ieq, may be defined as the d-axis currents command Idr and the q-axis current command Iqr, respectively (See equations 9 and 10). The d-axis current deviation Ied is a difference between a requested d-axis current req_Id, calculated on the basis of the torque command Tr, and the actual d-axis motor current Id. The q-axis current deviation Ieq is a difference between a requested q-axis current req_Iq, calculated on the basis of the torque command Tr, and the actual q-axis motor current Iq. Additionally, the d-axis current deviation Ied and the q-axis current deviation Ieq may be calculated at the voltage command calculation portion 5, which will be described below.

Equation 9: $Ied = req\_Id - Id$

Equation 10: $Ieq = req\_Iq - Iq$

The voltage command calculation portion 5 calculates a d-axis voltage command Vdr and a q-axis voltage command Vqr from the d-axis current command Idr and the q-axis current command Iqr, respectively, each of which is calculated by the current command calculation portion 4, on the basis of a voltage equation (S5 in Fig. 2). A voltage equation representing a d-axis voltage Vd and a q-axis voltage Vq is represented by the following equation (equation 11) where $\psi a$ indicates the interlinkage magnetic flux of the armatures, $\omega$ indicates the angular velocity, Id indicates the d-axis current, Iq indicates the q-axis current, Ld indicates the d-axis inductance, Lq indicates the q-axis inductance, Ra indicates an armature resistance and p indicates a differential operator.

$$\text{Equation 11:} \quad \begin{bmatrix} Vd \\ Vq \end{bmatrix} = \begin{bmatrix} Ra + pLd & -\omega Lq \\ \omega Ld & Ra + pLq \end{bmatrix} \begin{bmatrix} Id \\ Iq \end{bmatrix} + \begin{bmatrix} 0 \\ \omega \psi a \end{bmatrix}$$

A left matrix of a first right term in equation 7 indicates an impedance of the stator coil 1u, 1v and 1w. Thus, equation 11 is a voltage equation representing the voltage for driving the motor 1 by using the impedance of the stator coils 1u, 1v and 1w of the motor 1 including the interlinkage magnetic flux $\psi a$, the d-axis inductance Ld and the q-axis inductance Lq, the d-axis current Id and the q-axis current Iq. The voltage command calculation portion 5 calculates the d-axis voltage Vd and the q-axis voltage Vq by substituting the d-axis current command Idr and the q-axis current command Iqr or the other parameters into voltage equation 11 (S5 in Fig. 2: d-axis and q-axis voltage calculation process (voltage command calculation process)). The calculated d-axis voltage Vd and q-axis voltage Vq are output as the d-axis voltage command Vdr and the q-axis voltage command Vqr, respectively, unless modification on the d-axis voltage command Vdr and the q-axis voltage command Vqr is required. In this case, the process executed at S5 in Fig. 2 functions as the voltage command calculation process. In this embodiment, the d-axis voltage Vd and the q-axis voltage Vq, calculated on the basis of equation 11, are modified, and the modified d-axis voltage Vd and the q-axis voltage Vq are output as the d-axis voltage command Vdr and the q-axis voltage command Vqr, respectively. Therefore, this process may be regarded as a process of calculating the d-axis voltage command Vdr and the q-axis voltage command Vqr before being modified. In this case, the process executed at S5 in Fig. 2 functions as a voltage calculation process. Alternatively, the process executed at S5 in Fig. 2 may function as a voltage command calculating process together with a process executed at S7, which will be described below.

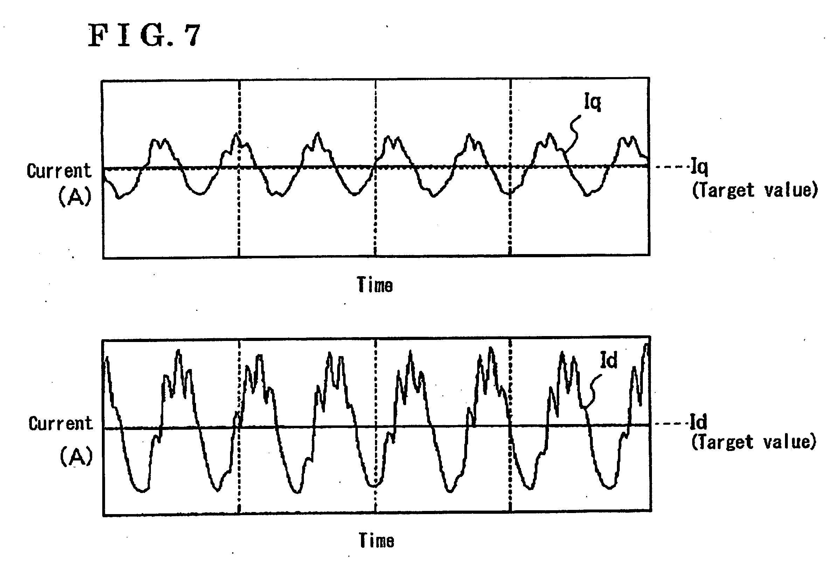

The d-axis voltage command Idr and the q-axis voltage command Iqr are inversely transformed into three-phase voltage commands vur, vvr and vwr at the inverse coordinate transformation portion 6. The three-phase voltage commands vur, vvr and vwr are inputted to the inverter 8 via the PWM portion 7, then transformed into the three-phase alternating currents (AD) by which the stator coils 1u, 1v and 1w of the motor 1 are energised. Fig. 6 is a waveform chart indicating the simulation result of an induced voltage of the U-pbase stator coil 1u (hereinafter referred to as a U-phase induced voltage) relative to induced voltages on the d-axis and q-axis (hereinafter referred to as a d-axis induced voltage and a q-axis induced voltage). The induced voltage is an electromotive voltage generated at a coil in proportion to a number of rotations of the motor while being driven. Fig. 7 is a waveform chart indicating the simulation results of the d-axis current Id and the q-axis current Iq relative to Fig. 6, and further, Fig. 7 illustrates d-axis current and the q-axis current generated by the d-axis induced voltage and the q-axis induced voltage, respectively. Each of the d-axis current Id and the q-axis current Iq having a pulsation, gained as the simulation results, is illustrated together with an ideal target current having a constant value in Fig. 7.

As is apparent from equations 4 and 8, the pulsations of the d-axis current Id and the q-axis current Iq cause torque fluctuation. The pulsations, i.e. disturbance currents, included in the d-axis current Id and the q-axis current Iq are caused by the pulsations, i.e. disturbance voltages, included in the d-axis induced voltage and the q-axis induced voltages, respectively, as illustrated in Fig. 6. In Fig. 6, a fifth harmonic included in the U-phase induced voltage as a high-order harmonic component is illustrated with an alternate long and short dash line. In a case where the disturbance voltage does not exist, the U-phase induced voltage expressed by a wave in a sin-wave shape, which indicates fundamental harmonic components, as illustrated with a dashed line in Fig. 6. However, in practice, as the disturbance voltage is superimposed to the U-phase induced voltage, the U-phase induced voltage is expressed by a distorted wave, as illustrated with a solid line in Fig. 6.

For example, if the disturbance voltage, which is the high-order harmonic component illustrated with the alternate long and short dash line in Fig. 6 is eliminated, the three-phase induced voltages such as the U-phase induced voltage expressed by the distorted wave may be approximated to voltages expressed by sin-waves. If the three-phase induced voltages are approximated to the voltages expressed by the sin-waves, respectively, disturbance currents superimposed on the motor currents are suppressed, thereby suppressing the torque fluctuation.

The disturbance voltage estimating portion 9 is a functional portion that estimates the disturbance voltages causing turbulence on motor currents and included in the induced voltages induced by three-phase driving voltages, generated by the inverter 8 on the basis of the voltage commands vur, vvr, vwr. Further, the disturbance voltage estimating portion 9 is the functional portion that feed-forwards the estimated results to the vector-control portion. In this embodiment, the disturbance voltage estimating portion 9 estimates a d-axis disturbance voltage Ved and a q-axis disturbance voltage Veq by identifying the high-order harmonic components on the d-axis voltage command Vdr and the q-axis voltage command Vqr (S6 in Fig. 2: disturbance voltage estimation process). As illustrated in Fig. 6, the high-order harmonics included in the induced voltages on the d-axis and the q-axis are harmonics of higher-order than fifth harmonics included in the three-phase induced voltages. More specifically, the high-order harmonic included in each of the induced voltages on the d-axis and the q-axis is a sixth harmonic. The disturbance voltages having the sixth harmonic component are identified as a function of the electrical angle θ of the motor 1, as indicated in the following equations (equations 12 and 13). 'A' in equation 12 and 'B' in equation 13 are constants.
$$\text{Equation 12:} \quad Ved = A \cdot \omega \cdot \sin(6\theta)$$

$$\text{Equation 13:} \quad Veq = B \cdot \omega \cdot \cos(6\theta)$$

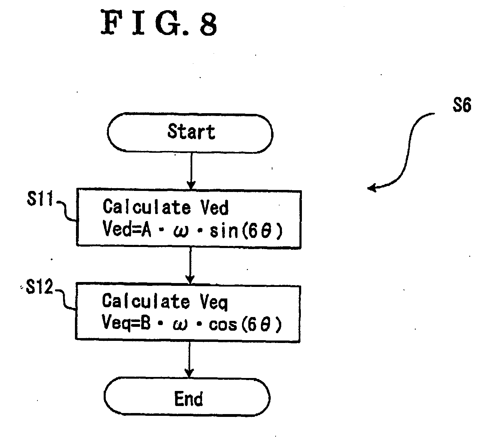

The disturbance voltage estimating portion 9 calculates and estimates the d-axis disturbance voltage Ved and the q-axis disturbance voltage Veq in response to the electrical angle θ, changing in response to rotation of the motor 1, and on the basis of equations 12 and 13 in which the high-order harmonic component is identified as the function of the electrical angle θ of the motor 1 (see Fig. 8). The estimated d-axis and q-axis disturbance voltages Ved and Veq are feed-forwarded to the vector-control portion. In this embodiment, as illustrated in Fig. 1, the estimated d-axis and q-axis disturbance voltages Ved and Veq are feed-forwarded to the voltage command calculation portion 5.
The voltage command calculation portion 5 calculates the modified d-axis voltage command Vdr and the q-axis voltage command Vqr, as indicated in the following equations (equations 14 and 15) (S7 in Fig. 2: Voltage command calculation process, modification process). More specifically, the voltage command calculation portion 5 obtains the modified d-axis voltage command Vdr and the q-axis voltage command Vqr by subtracting the d-axis disturbance voltage Ved and the q-axis disturbance voltage Veq, estimated by the disturbance voltage estimating portion 9, from the d-axis voltage Vd and the q-axis voltage Vq, both of which are the voltage commands before being modified, respectively. In other words, the voltage command calculation portion 5 offsets the high-order harmonic components, included in the voltage commands before being modified, with the disturbance voltages in order to modify the d-axis voltage Vd and the q-axis voltage Vq.
$$\text{Equation 14:} \quad Vdr = Vd - Ved$$

$$\text{Equation 15:} \quad Vqr = Vq - Veq$$

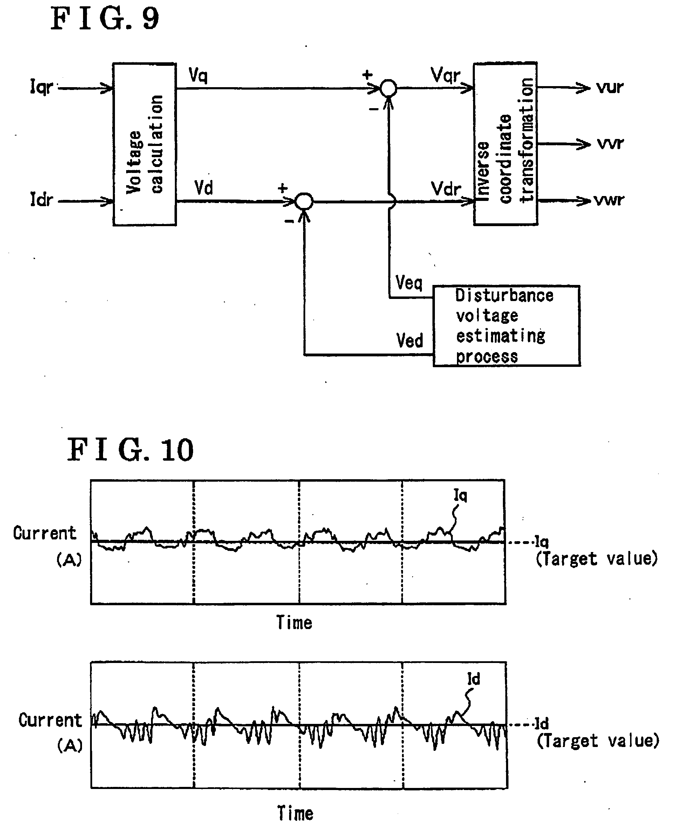

As illustrated in Fig. 9, differences between the d-axis voltage Vd and the q-axis voltage, both of which are the calculation results of the voltage command calculation, and the d-axis disturbance voltage Ved and the q-axis disturbance voltage Veq, both of which are the results of the disturbance voltage estimation process, respectively, are calculated in order to obtain the d-axis voltage command Vdr and the q-axis voltage command Vqr. The calculated d-axis voltage command Vdr and the q-axis voltage command Vqr are inversely coordinate-transformed into the voltage commands vur, vvr and vwr. In this embodiment, the differences between the d-axis voltage Vd and the q-axis voltage Vq and the d-axis disturbance voltage Ved and the q-axis disturbance voltage Veq, respectively, are calculated at the voltage command calculation portion 5. However, as is apparent from Figs. 8 and 9, as long as the differences between the d-axis voltage Vd and the q-axis voltage Vq and the d-axis disturbance voltage Ved and the q-axis disturbance voltage Veq, respectively, are calculated before executing the inverse coordinate transformation, the differences may be calculated at any timing. Therefore, the voltage command calculation portion 5 may output the d-axis voltage Vd and the q-axis voltage Vq, both of which are the calculation results of the voltage command calculation, as the d-axis voltage command Vdr and the q-axis voltage command Vqr, respectively, and then, the differences between the output d-axis voltage command Vdr and the q-axis voltage command Vqr and the d-axis disturbance voltage Ved and the q-axis disturbance voltage Veq, respectively, may be calculated at the inverse coordinate transformation portion 6, which will be described below.
The inverse coordinate transformation portion 6 transforms the d-axis voltage command Vdr and the q-axis voltage command Vqr into the U-phase, V-phase and W-phase voltage commands vur, vvr and vwr, in a manner inverse to the coordinate transformation executed by the coordinate transformation portion 2 (S8 in Fig. 2: inverse coordinate transformation process, three-phase voltage commands calculation process). For example, as represented in the following equations (equations 16 to 18), the d-axis voltage command Vdr and the q-axis voltage command Vqr are inversely coordinate transformer, and then output as the U-phase, V-phase and W-phase voltage commands vur, vvr and vwr.
$$\text{Equation 16:} \quad vur = \sqrt{\frac{2}{3}}(Vdr \cdot \cos\theta - Vqr \cdot \sin\theta)$$

$$\text{Equation 17:} \quad vvr = \sqrt{\frac{2}{3}}\left(Vdr \cdot \cos\left(\theta - \frac{2}{3}\pi\right) - Vqr \cdot \sin\left(\theta - \frac{2}{3}\pi\right)\right)$$

$$\text{Equation 18:} \quad vwr = -vur - vvr$$

As the three-phase voltage commands balance each other, the d-axis voltage command Vdr and the q-axis voltage command Vqr may be inversely coordinate-transformed into the voltage commands of two phases, and then the voltage command of the rest may be calculated on the basis of the voltage commands of the two phases. In this embodiment, the d-axis voltage command Vdr and the q-axis voltage command Vqr are inversely coordinate transformed into the U-phase voltage command vur and the V-phase voltage command vvr. Then, the W-phase voltage command vwr is calculated on the basis of the obtained U-phase voltage command vur and the V-phase voltage command vvr. The inverse coordinate transformation is executed in a manner inverse to the coordinate transformation, which is described above in accordance with Figs. 2 and 3. Hence, the detailed, description on method of the inverse coordinate transformation will be omitted.

The PWM portion 7 generates the driving signals pu, pv, pw, nu, nv and nw for driving the six switching elements of the inverter 8 by executing the pulse width modulation (PWM) on the basis of the three-phase voltage commands vur, vvr and vwr (S9 in Fig. 2: modulation process). The driving signals pu, pv and pw are the driving signals for the switching elements that function as the high-side switches, respectively. The driving signals nu, nv and nw are the driving signals for the switching elements that function as the low-side switches, respectively. Additionally, a dead time is set at each of the driving signals in order to prevent a line between the positive side and the negative side of the electric power sources to be short-circuited when the high-side switches and the low-side switches, which are connected in series, are simultaneously turned on. Therefore, it may be preferable that a dead time compensation portion (not shown) is additionally provided to the synchronous motor control device illustrated in Fig. 1. Alternatively, the PWM portion 7 may be configured to include a dead time compensation function.

The inverter 8 converts direct current (DC) voltage into alternating current (AD) voltage on the basis of the inverter driving signals pu, pv, pw, nu, nv and nw. Then, the armatures, i.e. stator coils 1u, 1v and 1w, are energised by the converted AD voltage. As a result, the rotating magnetic field is generated, thereby driving the motor 1.

Fig. 10 shows the simulation results of the d-axis current Id and the q-axis current Iq in a case where the motor 1 is driven by using the d-axis voltage command Vdr and the q-axis voltage command Vqr that are modified in the above-described manner. Comparing to waveforms of the d-axis current Id and the q-axis current Iq obtained in the case where the d-axis voltage command Vdr and the q-axis voltage command Vqr are not modified, it is apparent that the disturbance currents caused by the high-order harmonic are largely suppressed when the modified d-axis voltage command Vdr and the q-axis voltage command Vqr are utilized.

Each of the d-axis disturbance voltage Ved and the q-axis disturbance voltage Veq includes the sixth high-order harmonic component. A basic equation of the armatures (stator coils) having a three-phase voltage model is represented in the following equation (equation 19) where R indicates the armature resistance (DC resistance), I indicates a three-by-three identity matrix, Ψ indicates a vector of number of the interlinkage magnetic fluxes, Ψf indicates a vector of number of the interlinkage magnetic flux of the permanent magnets, i indicates a three-phase current vector, v indicates a three-phase voltage vector, and L indicates a sum of self-inductances and mutual inductances. Additionally, '→'in equation 19 indicates a vector.

Equation 19: $\vec{v} = R \cdot I \cdot \vec{i} + \dfrac{d}{dt}\vec{\Psi} = R \cdot I \cdot \vec{i} + L\dfrac{d\vec{i}}{dt} + \dfrac{d}{dt}\vec{\Psi}f$

'L' in equation 19 is represented by the following equation (equation 20) when self-inductances of the stator-coils 1u, 1v and 1w, forming the three-phases, are defined as Lu, Lv and Lw, respectively, and mutual inductances of the stator coils 1u, 1v and 1w are defined as Muv, Muw, Mvu, Mvw, Mwu and Mwv.

Equation 20: $L = \begin{bmatrix} Lu & Muv & Muw \\ Mvu & Lv & Mvw \\ Mwu & Mwv & Lw \end{bmatrix}$

The self inductances Lu, Lv and Lw are represented in the following equation (equation 21) where la indicates a linkage inductance, La indicates DC generated by the self-inductance, and Las indicates an amplitude generated by the self-inductance.

Equation 21: $Lu = la + La - Las \cdot \cos(2\theta)$

$Lv = la + La - Las \cdot \cos\left(2\theta - \dfrac{4}{3}\pi\right)$

$Lw = la + La - Las \cdot \cos\left(2\theta + \dfrac{4}{3}\pi\right)$

The mutual inductances Muv, Muw, Mvu, Mvw, Mwu and Mwv are represented in the following equation (equation 22) where la indicates the linkage inductance, La indicates the DC generated by the self-inductance, and Lad indicates the amplitude generated by the self-inductance.

Equation 22: $Muv = Mvu = -\dfrac{1}{2}La - Las \cdot \cos\left(2\theta + \dfrac{4}{3}\pi\right)$

$Mvw = Mwv = -\dfrac{1}{2}La - Las \cdot \cos(2\theta)$

$Mwu = Muw = -\dfrac{1}{2}La - Las \cdot \cos\left(2\theta - \dfrac{4}{3}\pi\right)$

Number of the interlinkage magnetic flux of three-phases $\Psi fu$, $\Psi fv$ and $\Psi fw$ generated by the permanent magnets may be represented in the following equation (equation 23) when the high-order harmonic component is taken into consideration. Subscript 'n' of, for example, '$\Psi f_n$' and '$\phi_n$' in equation 23 indicates a degree of the high-order harmonic. More specifically, '$\Psi f_n$' indicates amplitude of a n-order harmonic, and '$\phi_n$' indicates a phase of the n-order harmonic. Additionally, as influence of harmonics of higher-order than seventh harmonics may not necessarily be taken into consideration, the high-order harmonic components up to the seventh harmonic are taken into consideration in this embod-

iment.

**Equation 23:**

$$
\begin{bmatrix} \Psi fu \\ \Psi fv \\ \Psi fw \end{bmatrix} = \Psi f_1 \begin{bmatrix} \cos\theta \\ \cos\left(\theta - \frac{2}{3}\pi\right) \\ \cos\left(\theta + \frac{2}{3}\pi\right) \end{bmatrix} + \Psi f_3 \begin{bmatrix} \cos 3(\theta - \phi_3) \\ \cos 3\left(\theta - \phi_3 - \frac{2}{3}\pi\right) \\ \cos 3\left(\theta - \phi_3 + \frac{2}{3}\pi\right) \end{bmatrix}
$$

$$
+ \Psi f_5 \begin{bmatrix} \cos 5(\theta - \phi_5) \\ \cos 5\left(\theta - \phi_5 - \frac{2}{3}\pi\right) \\ \cos 5\left(\theta - \phi_5 + \frac{2}{3}\pi\right) \end{bmatrix} + \Psi f_7 \begin{bmatrix} \cos 7(\theta - \phi_7) \\ \cos 7\left(\theta - \phi_7 - \frac{2}{3}\pi\right) \\ \cos 7\left(\theta - \phi_7 + \frac{2}{3}\pi\right) \end{bmatrix}
$$

The voltage is obtained by differentiating the interlinkage magnetic flux. When equation 23 is differentiated, induced voltages of the U-phase, V-phase and W-phase Eu, Ev and Ew (hereinafter referred to as a U-phase induced voltage Eu, a V-phase induced voltage Ev and a W-phase induced voltage Ew) are obtained, as indicated in the following equation (equation 24).

**Equation 24:**

$$
\begin{bmatrix} Eu \\ Ev \\ Ew \end{bmatrix} = \omega\Psi f_1 \begin{bmatrix} \sin\theta \\ \sin\left(\theta - \frac{2}{3}\pi\right) \\ \sin\left(\theta + \frac{2}{3}\pi\right) \end{bmatrix} + \omega\Psi f_3 \begin{bmatrix} \sin 3(\theta - \phi_3) \\ \sin 3\left(\theta - \phi_3 - \frac{2}{3}\pi\right) \\ \sin 3\left(\theta - \phi_3 + \frac{2}{3}\pi\right) \end{bmatrix}
$$

$$
+ \omega\Psi f_5 \begin{bmatrix} \sin 5(\theta - \phi_5) \\ \sin 5\left(\theta - \phi_5 - \frac{2}{3}\pi\right) \\ \sin 5\left(\theta - \phi_5 + \frac{2}{3}\pi\right) \end{bmatrix} + \omega\Psi f_7 \begin{bmatrix} \sin 7(\theta - \phi_7) \\ \sin 7\left(\theta - \phi_7 - \frac{2}{3}\pi\right) \\ \sin 7\left(\theta - \phi_7 + \frac{2}{3}\pi\right) \end{bmatrix}
$$

When the U-phase induced voltage Eu, the V-phase induced voltage Ev and the W-phase induced voltage Ew are transformed into the d-axis and the q-axis, an induced voltage on the d-axis Ed (hereinafter referred to as a d-axis induced voltage Ed) and an induced voltage on the q-axis Eq (hereinafter referred to as a q-axis induced voltage Eq) are obtained, as indicated in the following equation (equation 25).

Equation 25:

$$\begin{bmatrix} Ed \\ Eq \end{bmatrix} = \sqrt{\frac{2}{3}} \begin{bmatrix} \cos\theta & \cos\left(\theta - \frac{2}{3}\pi\right) & \cos\left(\theta + \frac{2}{3}\pi\right) \\ -\sin\theta & -\sin\left(\theta - \frac{2}{3}\pi\right) & -\sin\left(\theta + \frac{2}{3}\pi\right) \end{bmatrix} \begin{bmatrix} Eu \\ Ev \\ Ew \end{bmatrix}$$

$$= \sqrt{\frac{2}{3}} \left[ \omega \Psi f_1 \begin{bmatrix} 0 \\ 1 \end{bmatrix} + 3\omega \Psi f_3 \begin{bmatrix} 0 \\ 0 \end{bmatrix} + 5\omega \Psi f_5 \begin{bmatrix} -\sin(6\theta - 5\phi_5) \\ -\cos(6\theta - 5\phi_5) \end{bmatrix} + 7\omega \Psi f_7 \begin{bmatrix} -\sin(6\theta - 7\phi_7) \\ -\cos(6\theta - 7\phi_7) \end{bmatrix} \right]$$

It becomes apparent from equation 25 that the sixth harmonic appears on the d-axis induced voltage Ed and the q-axis induced voltage Eq. A constant may be identified by executing simulation and the like, depending on characteristics of the motor 1. Equations 12 and 13 represent the d-axis disturbance voltage Ved on the d-axis induced voltage and the q-axis disturbance voltage Veq on the q-axis induced voltage, respectively, in the case where the constants are identified relative to the motor 1.

[Second embodiment]

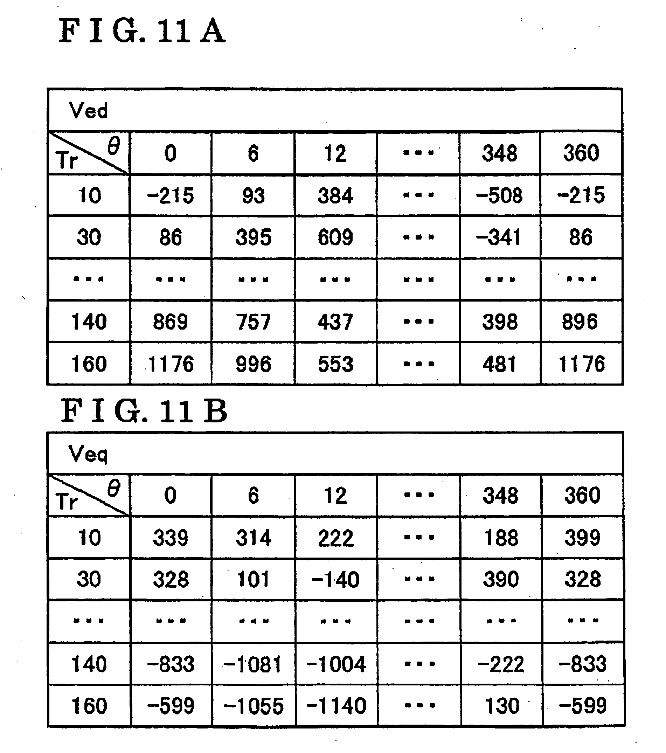

A second embodiment of the synchronous motor control device and synchronous motor control method will be described below. The synchronous motor control device is structured substantially the same as the synchronous motor device of the first embodiment. Hence, the detailed description of the structure of the synchronous motor control device according to the second embodiment will be omitted. Additionally, the control procedure of the synchronous motor of the second embodiment is substantially the same as the control procedure of the synchronous motor of the first embodiment. Hence, the detailed description of the control procedure of the synchronous motor of the second embodiment will be omitted. In the first embodiment, the disturbance voltage estimating portion 9 calculates and estimates the d-axis disturbance voltage Ved and the q-axis disturbance voltage Veq on the basis of equations 12 and 13, respectively, at S6 in Fig. 2. On the other hand, in the second embodiment, the disturbance voltage estimating portion 9 does not execute a calculation on the basis of an equation, but the disturbance voltage estimating portion 9 obtains and estimates the d-axis disturbance voltage Ved and the q-axis disturbance voltage Veq by referring to a table of the d-axis disturbance voltage Ved illustrated in Fig. 11 and a table of the q-axis disturbance voltage Veq illustrated in Fig. 11B, respectively.

Fig. 11A is a table illustrating the d-axis disturbance voltage Ved. Fig. 11B is a table illustrating the q-axis disturbance voltage Veq. Both tables are stored in a storage media, e.g. a flash memory. The storage media such as the flash memory is configured by being included in, for example, a microcomputer within which the vector-control portion is configured, electronic circuitry to which the microcomputer is provided, and the like. Each table illustrated in Fig. 11 is configured as, for example, a relative table in which the torque command Tr and the electrical angle θ are defined as parameters. In Fig. 11, the electrical angle θ is not measured in radian (rad), but measured in degree (deg), The parameters are not limited to the torque T and the electrical angle θ, but a current root mean square value and the electrical angle θ may be set as the parameters.

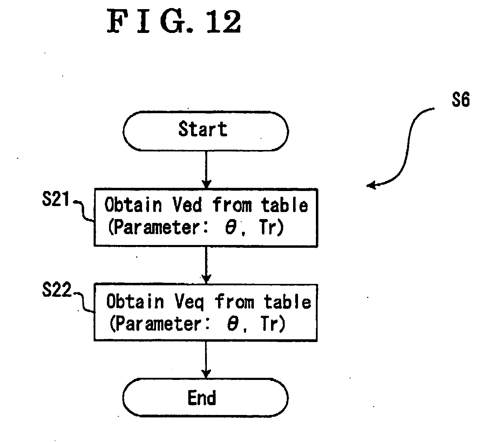

In the second embodiment, the disturbance voltage estimating portion 9 obtains the d-axis disturbance voltage Ved and the q-axis disturbance voltage Veq with reference to the tables, as illustrated in Fig. 12, as the process executed at S6 in Fig. 2. For example, the disturbance voltage estimating portion 9 obtains the d-axis disturbance voltage Ved from the table illustrated in Fig. 11A (S21), and the disturbance voltage estimating portion 9 obtains the q-axis disturbance voltage Veq from the table illustrated in Fig. 11B (S22), with the torque command Tr and the electrical angle θ being used as the parameters. Increase of calculation load applied to the disturbance voltage estimating portion 9 is restricted if the synchronous motor control device is configured to obtain the d-axis disturbance voltage Ved and the q-axis disturbance voltage Veq by referring to the tables, depending on calculation capacity, calculation load and the like of the microcomputer configuring the vector-control portion.

[Third embodiment]

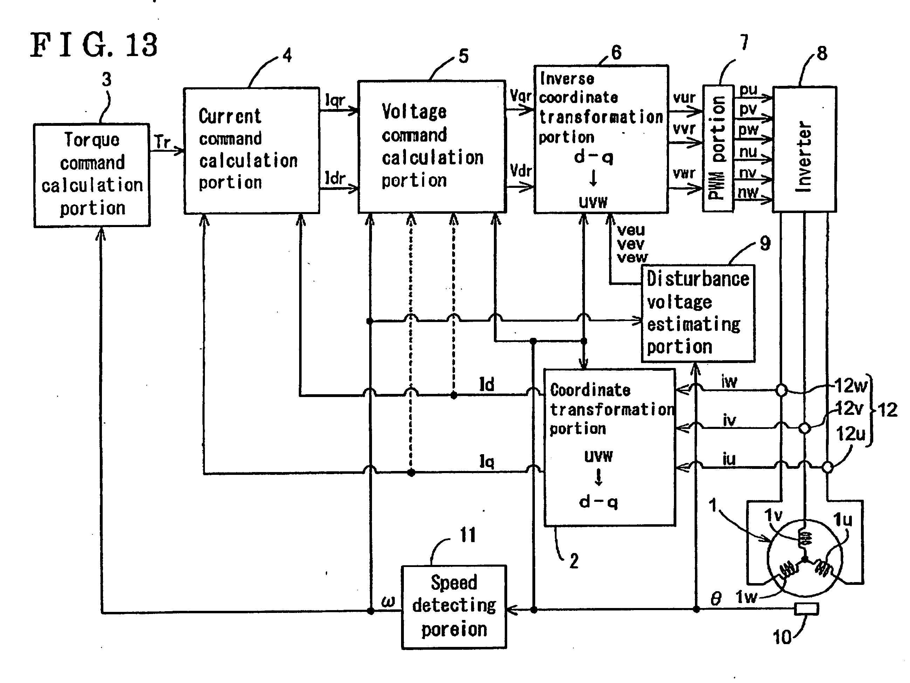

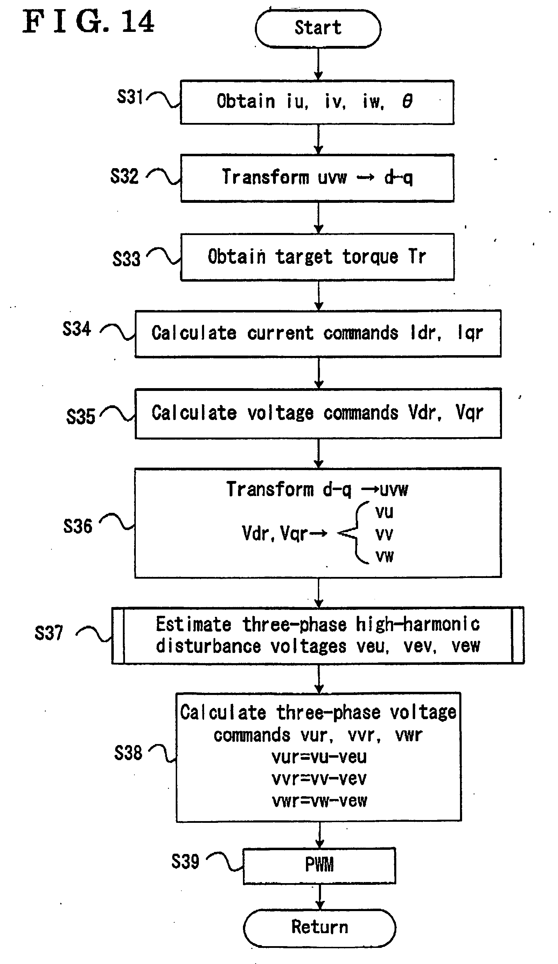

A third embodiment of the synchronous motor control device and the synchronous motor control method will be described below. Fig. 13 is a block diagram schematically illustrating a Configuration example of the synchronous motor control device related to the third embodiment. Fig. 14 is a flowchart illustrating an example of controlling procedure executed by the synchronous motor control device. In the first and second embodiments, the disturbance voltages are estimated on the d-axis and the q-axis. In the third embodiment, the disturbance voltage estimating portion 9 estimates disturbance voltages on the three-phases. As illustrated in Fig. 13, the disturbance voltage estimating portion 9 estimates a U-phase disturbance voltage veu, a V-phase disturbance voltage vev and a W-phase disturbance voltage vew, and then the estimated results are feed-forwarded to the vector-control portion. In the third embodiment, as illustrated in Fig. 13, the estimated results are feed-forwarded to the inverse coordinate transformation portion 6. The other portions except for the disturbance voltage estimating portion 9 are configured substantially the same as the configuration example of the first and second embodiments described in accordance with Fig. 1. Hence, the detailed description on the same structure with the first and the second embodiments will be omitted.

As is the case with the first and second embodiments, the vector-control portion obtains three-phase motor currents iu, iv, iw and the rotational angle (the electrical angle $\theta$) of the rotor (S31 in Fig. 14). The coordinate transformation portion 2 coordinate-transforms the three-phase motor currents iu, iv and iw into a vector component Id of the d-axis (hereinafter referred to as a d-axis vector component Id), corresponding to the direction where the magnetic field being generated by the permanent magnets provided at the rotor of the motor 1, and a vector component Iq of the q-axis (hereinafter referred to as a q-axis vector component Iq) orthogonal to the d-axis (S32 in Fig. 14: coordinate transformation process). The current command calculation portion 4 obtains the torque command Tr (the target torque) calculated by the torque command calculation portion 3 (S33 in Fig. 14). Then, the current command calculation portion 4 calculates the d-axis current command Idr and the q-axis current command Iqr (S34 in Fig. 14: current command calculation process). The above-mentioned processes are the same as the processes described in the first embodiment, therefore, the detailed description of the above-mentioned processes will be omitted.

The voltage command calculation portion 5 calculates the d-axis voltage Vd and the q-axis voltage Vq by substituting the d-axis current command Idr, the q-axis current command Iqr or the other parameters into the voltage equation represented by equation 11 (S35 in Fig. 14: d-axis and q-axis voltages calculation process, voltage command calculation process). In the first embodiment, each of the d-axis voltage Vd and the q-axis voltage Vq, calculated on the basis of voltage equation 11, is modified by taking each of the d-axis disturbance voltage Ved and the q-axis disturbance voltage Veq into consideration in order to obtain each of the d-axis voltage command Vdr and the q-axis voltage command Vqr. On the other hand, in the third embodiment, the calculated d-axis voltage Vd and the q-axis voltage Vq are output as the d-axis voltage command Vdr and the q-axis voltage command Vqr, respectively, instead of executing the modification on the d-axis voltage Vd and the q-axis voltage Vq.

The inverse coordinate transformation portion 6 transforms the d-axis voltage command Vdr and the q-axis voltage command Vqr into the three-phase voltages vu, vv and vw in the manner inverse to the coordinate transformation executed by the coordinate transformation portion 2 (S36 in Fig. 14: inverse coordinate transformation process). As described above, the three-phase voltages balance each other. Hence, the d-axis voltage command Vdr and the q-axis voltage command Vqr may be inversely coordinate-transformed into the voltages of two phases, and then the voltage of the rest may be calculated on the basis of the voltage commands of the two phases. In the third embodiment, the d-axis voltage command Vdr and the q-axis voltage command Vqr are inversely coordinate-transformed into the U-phase voltage vu and the V-phase voltage vv. Then, the W-phase voltage vw is calculated on the basis of the obtained U-phase voltage vu and the V-phase voltage w. The inverse coordinate transformation is executed in the same manner as in S8 in Fig. 2 of the first embodiment, and as indicated in equations 16, 17 and 18. In the first embodiment, the d-axis voltage command Vdr and the q-axis voltage command Vqr are modified, by taking the respective d-axis disturbance voltage Ved and the q-axis disturbance voltage Veq into consideration. Therefore, the inversely coordinate-transformed three-phase voltages vu, vv and vw are output as the three-phase voltage commands vur, vvr and vwr. On the other hand, in the third embodiment, the U-phase voltage vu, the V-phase voltage vv and the W-phase voltage vw are modified, with taking the disturbance voltages veu, vev and vew, respectively, into consideration. As a result, the U-phase voltage command vur, the V-phase voltage command wr and the W-phase voltage command vwr are obtained. The U-phase, V-phase and W-phase disturbance voltages veu, vev and vew are estimated by the disturbance voltage estimating portion 9 (S37 in Fig. 14: disturbance voltage estimation process).

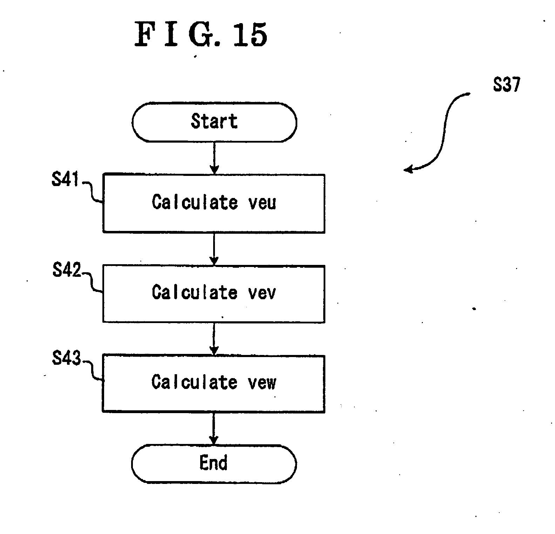

The disturbance voltage estimating portion 9 calculates the U-phase disturbance voltage veu, the V-phase disturbance voltage vev and the W-phase disturbance voltage vew, as indicated in S41, S42 and S43 in Fig. 15, by executing calculation of, for example, equation 24. The plural high-order harmonics are included in equation 24, which complicates the equation. However, equation 24 may be appropriately reduced. For example, it is demonstrable by an experimental test, computer analysis and the like that influence of the fifth harmonic and the seventh harmonic in equation 24 is much greater than influence of high-order harmonics equal to or lower than the third harmonic. It is also demonstrable that the influence of the sixth harmonic generated by the fifth and seventh harmonics becomes dominant in equation 25 obtained by transforming the U-phase induced voltage Eu, the V-phase induced voltage Ev and the W-phase induced voltage Ew into the d-axis and the q-axis.

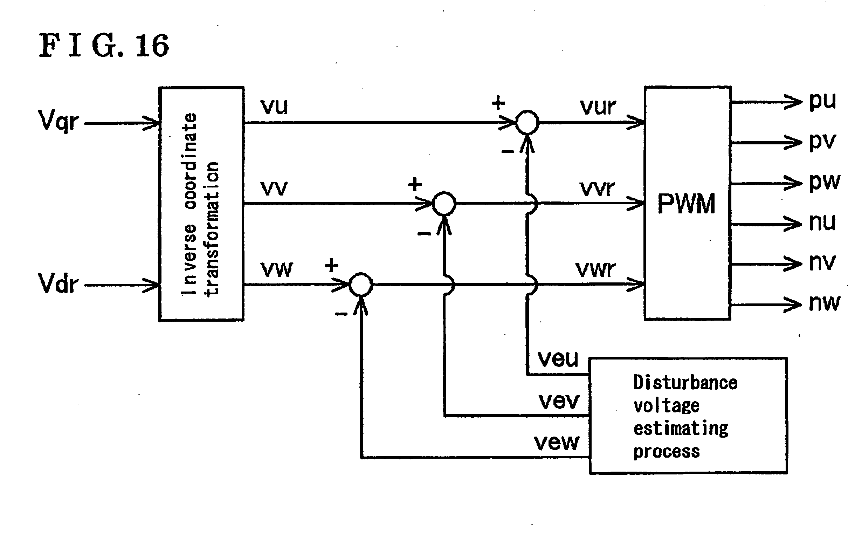

The inverse coordinate transformation portion 6 subtracts the U-phase disturbance voltage veu, the V-phase disturbance voltage vev and the W-phase disturbance voltage vew from the U-phase voltage vu, the V-phase voltage w and the W-phase voltage vw, respectively. In other words, the inverse coordinate transformation portion 6 calculates the U-phase, V-phase and W-phase voltage commands vur, vvr and vwr by offsetting the disturbance voltages veu, vev and vew by subtracting the disturbance voltages veu, vev and vew from the voltages vu, w and vw, respectively (S38 in Fig. 14: three-phase voltage command calculation process, modification process). In the third embodiment, the inverse coordinate transformation portion 6 calculates differences between the U-phase, V-phase and W-phase voltages vu, vv and vw and the U-phase, V-phase and W-phase disturbance voltages veu, vev and the vew, respectively. However, as is evident from Fig. 16, as long as the difference between the disturbance voltages veu, vev and vew and the voltages vu, vv and vw, respectively, are calculated after the execution of the inverse coordinate transformation, the differences my be calculated at any timing. Hence, the inverse coordinate transformation portion 6 alternatively outputs the U-phase voltage vu, the V-phase voltage w and the W-phase voltage vw, which are obtained as the results of the inverse coordinate transformation, as the U-phase voltage command vur, the V-phase voltage command vvr and the W-phase voltage command vwr, respectively; and then the differences between the U-phase, V-phase and W-phase voltage commands vur, vvr and vwr and the U-phase, V-phase and W-phase disturbance voltages veu, vev and vew, respectively, may be calculated at the PWM portion 7 before an execution of a modulation process.

The PWM portion 7 executes the PWM in order to generate the driving signals pu, pv, pw, nu, nv and nw for driving the six switching elements of the inverter 8 on the basis of the U-phase voltage command vur, the V-phase voltage command vvr and he W-phase voltage command vwr.

The inverter 8 converts the DC voltage into the AD voltage on the basis of the inverter driving signals pu, pv, pw, nu, nv and nw. Then, the armatures, i.e, the stator coils lu, lv and lw, are energised by the converted DC voltage. As a result, the rotating magnetic field is generated, thereby driving the motor 1.

[Fourth Embodiment]

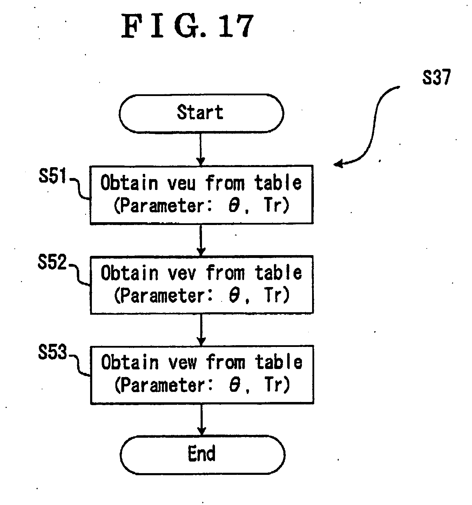

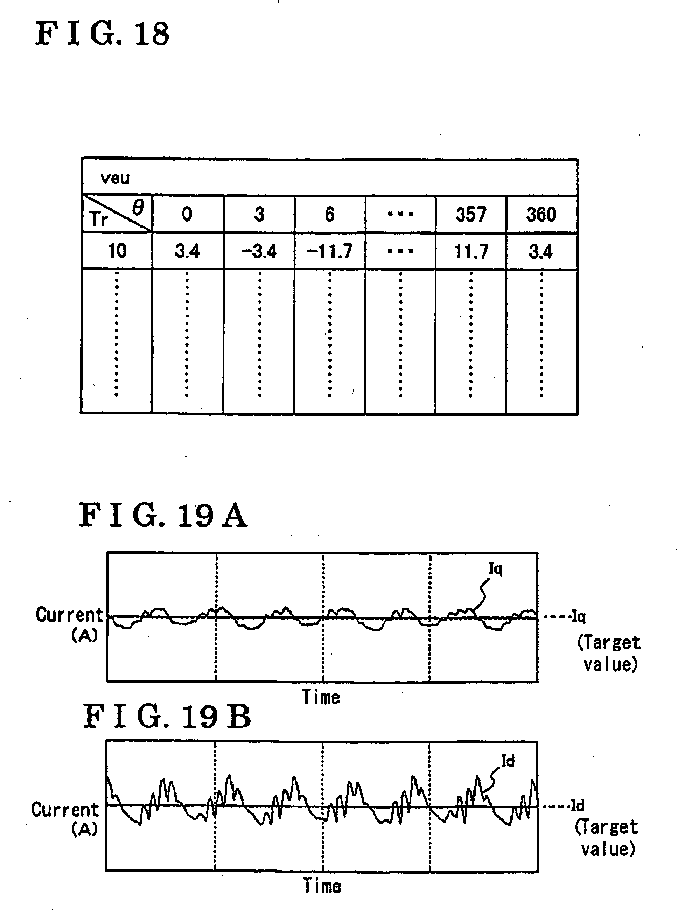

A fourth embodiment of the synchronous motor control device and the synchronous motor control method will be described below. A modified example of the third embodiment will be described in the fourth embodiment. The synchronous motor device ofthe fourth embodiment is configured substantially the same as the synchronous motor control device of the third embodiment illustrated in Fig. 13. Therefore, the detailed description on the structure of the synchronous motor control device ofthe fourth embodiment will be omitted. Further, the controlling procedure of the synchronous motor control device offourth embodiment is substantially the same as the controlling procedure of the synchronous motor control device of the third embodiment. Therefore, the detailed description on the controlling procedure of the synchronous motor control device will be omitted. In the third embodiment, the disturbance voltage estimating portion 9 estimates the three-phase disturbance voltages veu, vev and vew on the basis of the calculation, as illustrated in Fig. 15, as the process executed at S37 in Fig. 14. On the other hand, in the fourth embodiment, the disturbance voltage estimating portion 9 does not execute a calculation on the basis of an equation, but obtains the three-phase disturbance voltages veu, vev and vew by referring to correlation tables, for example, a correlation table illustrated in Fig. 18, as shown in a flowchart illustrated in Fig. 17.

Fig. 18 illustrates a part of a table of the U-phase disturbance voltage veu as an example. As is the case with the second embodiment, the tables ofthe three-phase disturbance voltages are stored in the storage media, e.g. a flash memory. The storage media such as the flash memory is configured by being included in, for example, the microcomputer within which the vector-control portion is configured, electronic circuitry to which the microcomputer is provided, and the like. As is the case with the second embodiment, each table of the disturbance voltages is configured with defining the torque command Tr and the electrical angle θ as the parameters. As is the case with Fig. 11, the electrical angle θ is not measured in radian (rad), but measured in degree (deg) in Fig. 18. The parameters are not limited to the torque T and the electrical angle θ, but the current root mean square value and the electrical angle θ may be set as the parameters.

In the fourth embodiment, the disturbance voltage estimating portion 9 obtains the U-phase disturbance voltage veu, the V-phase disturbance voltage vev and the W-phase disturbance voltage vew with reference to the tables as the process executed at S37 in Fig. 14, as illustrated in Fig. 17. In other words, the disturbance voltage estimating portion 9 obtains the U-phase disturbance voltage veu from the table illustrated in Fig. 18 with the torque command Tr and the electrical angle θ defined as the parameters (S51). Similarly, the disturbance voltage estimating portion 9 obtains the V-phase disturbance voltage vev from the corresponding table (now shown) (S52) and the W-phase disturbance voltage vew from the corresponding table (now shown) (S53).

The increase of the calculation load applied to the disturbance voltage estimating portion 9 is restricted if the synchronous motor control device is configured to obtain the U-phase disturbance voltage veu, the V-phase disturbance voltage vev and the W-phase disturbance voltage vew by referring to the tables, depending on the calculation capacity, the calculation load and the like of the microcomputer configuring the vector-control portion. As described in the third embodiment, in the case where the U-phase disturbance voltage veu, the V-phase disturbance voltage vev and the W-phase disturbance voltage vew are calculated on the basis of formulas, a relatively complicated calculation needs to be executed. Further, in the case where the d-axis disturbance voltage Ved and the q-axis disturbance voltage Veq are calculated, two calculations for obtaining the d-axis and q-axis disturbance voltages Ved and Veq need to be executed. In the case where the U-phase disturbance voltage veu, the V-phase disturbance voltage vev and the W-phase disturbance voltage vew are calculated, three calculations for obtaining the disturbance voltages veu, vev and vew need to be executed. Therefore, a calculation load restricting effect of the fourth embodiment relative to the third embodiment achieved by estimating the disturbance voltages by referring to the tables is expected to be greater than that of the second embodiment relative to the first embodiment.

Fig. 19 illustrates the simulation results of the armature currents in the case where the motor 1 is driven by using the U-phase voltage command vur, the V-phase voltage command vvr and the W-phase voltage command vwr that are modified in the above-described manner. In order to simplify a comparison between the d-axis and the q-axis currents, including the disturbance currents, and the modified voltage commands vur, vvr and vwr, the modified U-phase, V-phase and W-phase voltage commands vur, vvr and vwr are represented by the d-axis and q-axis currents. Comparing to the d-axis and q-axis currents, illustrated in Fig. 7, to which the modifications of the disturbance voltages are not executed, it is apparent that disturbance currents occurred by the high-order harmonic of the d-axis and q-axis currents of the fourth embodiment, obtained by modifying the voltages commands vur, vvr and vwr, are largely reduced.

As a result, the synchronous motor control device and the synchronous motor control method for appropriately suppressing the torque fluctuation factors including the high-order harmonic components of the synchronous motor, to which the vector-control is executed, is achievable.

A synchronous motor control device includes a vector-control portion including a coordinate transformation portion (2) for coordinate-transforming motor currents (iu, iv, iw) into a d-axis vector component (Id) and a q-axis vector component (Iq), a current command calculation portion (4) for calculating a d-axis current command (Idr) and a q-axis current command (Iqr) based on the vector-transformed respective d-axis and iq-axis motor currents (Id, Iq), and a target torque (Tr), a voltage command calculation portion (5) for calculating a d-axis voltage command (Vdr) and a q-axis voltage command (Vqr) based on the d-axis and q-axis current commands (Idr, Iqr), respectively, and an inverse coordinate transformation portion (6) for inversely coordinate-transforming the d-axis and q-axis voltage commands (Vdr, Vqr) into three-phase voltage commands (vur, vvr, vwr), and a disturbance voltage estimating portion (9) for estimating disturbance voltages (Ved, Veq/ veu, vev, vew) and feed-forwarding an estimated result to the vector-control portion.

**Claims**

1.  A synchronous motor control device comprising:

    a vector-control portion including:

        a coordinate transformation portion **(2)** for coordinate-transforming motor currents **(iu, iv, iw)** applied to respective three phases **(U-phase, V-phase, W-phase)** of a synchronous motor **(1)** into a vector component **(Id)** of a d-axis, corresponding to a direction of a magnetic field generated by a permanent magnet arranged at a rotor of the synchronous motor **(1)** and a vector component **(Iq)** of a q-axis orthogonal to the d-axis;
        a current command calculation portion **(4)** for calculating a d-axis current command **(Idr)** and a q-axis current command **(Iqr)** on the basis of the vector-transformed respective d-axis motor current **(Id)** and q-axis motor current **(Iq),** and a target torque **(Tr);**
        a voltage command calculation portion **(5)** for calculating a d-axis voltage command **(Vdr)** and a q-axis voltage command **(Vqr)** on the basis of the d-axis current command **(Idr)** and the q-axis current command **(Iqr),** respectively; and
        an inverse coordinate transformation portion **(6)** for inversely coordinate-transforming the d-axis voltage command **(Vdr)** and the q-axis voltage command **(Vqr)** into three-phase voltage commands **(vur, vvr, vwr)** applied to the respective three-phases **(U-phase, V-phase, W-phase)** of the synchronous motor **(I);** and
        a disturbance voltage estimating portion **(9)** for estimating disturbance voltages **(Ved, Veq/ veu, vev, vew),** which are included in respective induced voltages **(Ed, Eq/ Eu, Ev, Ew)** induced by three-phase driving voltages generated by an inverter **(8)** on the basis of the respective three-phase voltage commands **(vur, wr, vwr)** and cause a turbulence on the motor currents **(iu, iv, vw),** and feed-forwarding an estimated result to the vector-control portion,

    wherein the disturbance voltage estimating portion **(9)** estimates the disturbance voltages **(Ved, Veq)** by identifying a high-order harmonic component on the d-axis and q-axis voltage commands **(Vdr, Vqr),** and the inverse coordinate transformation portion **(6)** inversely coordinate-transforms modified voltage commands **(Vdr, Vqr),** which are obtained by subtracting the disturbance voltages **(Ved, Veq),** estimated relative to the voltage commands **(Vd, Vq)** before being modified, from the d-axis and q-axis voltage commands **(Vd, Vq),** before being modified, respectively, into the three-phase voltage commands **(vur, vvr, vwr)**.

2. The synchronous motor control device according to Claim 1, wherein the disturbance voltage estimating portion **(9)** identifies a high-harmonic component as a function of an electrical angle (θ) of the synchronous motor **(1)** and estimates the disturbance voltages **(Ved, Veq/ veu, vev, vew)** on the basis of the electrical angle (θ) changing in response to a rotation of the synchronous motor **(1)**.

3. The synchronous motor control device according to Claim 1, wherein the disturbance voltage estimating portion **(9)** includes a correlation table in which a high-order harmonic is identified as a correlation value of the target torque **(Tr)** and the electrical angle (θ ), and estimates the disturbance voltages **(Ved, Veq/ veu, vev, vew)** on the basis of the target torque **(Tr)** and the electrical angle (θ), which changes in response to a rotation of the synchronous motor **(1),** on the basis of the correlation table.

4. A synchronous motor control method for executing a vector-control by coordinate-transforming motor currents (**iu, iv, iw**) applied to respective three phases (**U-phase, V-phase, W-phase**) of a synchronous motor **(1)** into a vector component **(Id)** of a d-axis, corresponding to a direction of a magnetic field generated by a permanent magnet arranged at a rotor of the synchronous motor **(1),** and a vector component **(Iq)** of a q-axis orthogonal to the d-axis, and for controlling the synchronous motor **(1)** by inversely coordinate-transforming the d-axis and q-axis components into three-phase components and energizing armatures forming the three-phases of the synchronous motor **(1),** the method comprising:

a current command calculation process **(S4)** for calculating a d-axis current command **(Idr)** and a q-axis current command **(Iqr)** on the basis of respective vector-transformed d-axis current **(Id)** and a q-axis current **(Id),** and a target torque **(Tr);**
a voltage command calculation process (**S5/S7**) for calculating a d-axis voltage command **(Vdr)** and a q-axis voltage command **(Vqr)** on the basis of the d-axis current command **(Idr)** and the q-axis current command (Iqr), respectively;
a disturbance voltage estimation process **(S6)** for estimating disturbance voltages **(Ved, Veq)**, included in induced voltages **(Eu, Ev, Ew)** of the armatures and cause turbulence on the motor currents **(iu, iv, iw),** by identifying a high-order harmonic component on the d-axis voltage command **(Vdr)** and the q-axis voltage command **(Vqr) ;**
a modification process **(S7)** for modifying the d-axis voltage command **(Vdr)** and the q-axis voltage command **(Vqr)** by calculating differences between the d-axis and q-axis voltage commands **(Vdr, Vqr)** and the disturbance voltages **(Ved, Veq),** estimated relative to the d-axis and q-axis voltage commands **(Vdr, Vqr),** respectively; and
an inverse coordinate transformation process **(S8)** for inversely coordinate-transforming the modified voltage commands **(Vdr, Vqr)** into three-phase voltage commands **(vur, vvr, vwr).**

**Patentansprüche**

1. Synchronmotorsteuerungsvorrichtung mit
einem Vektorsteuerungsabschnitt mit
einem Koordinatentransformationsabschnitt **(2)** zur Koordinatentransformation von Motorströmen **(iu, iv, iw),** die jeweiligen drei Phasen **(U-Phase, V-Phase, W-Phase)** eines Synchronmotors **(1)** beaufschlagt werden, in eine Vektorkomponente **(Id)** einer d-Achse, die einer Richtung eines Magnetfeldes entspricht, das durch einen an einem Rotor des Synchronmotors **(1)** angeordneten Permanentmagneten erzeugt wird, und eine Vektorkomponente **(Iq)** einer q-Achse, die orthogonal zu der d-Achse ist,
einem Strombefehlsberechnungsabschnitt **(4)** zur Berechnung eines d-Achsen-Strombefehls **(Idr)** und eines q-Achsen-Strombefehls **(Iqr)** auf der Grundlage des d-Achsen-Motorstroms **(Id)** und des q-Achsen-Motorstroms **(Iq),** die jeweils vektortransformiert sind, und eines Soll-Drehmoments **(Tr),**
einem Spannungsbefehlsberechnungsabschnitt **(5)** zur Berechnung eines d-Achsen-Spannungsbefehls **(Vdr)** und eines q-Achsen-Spannungsbefehls **(Vqr)** auf der Grundlage jeweils des d-Achsen-Strombefehls **(Idr)** und des q-Achsen-Strombefehls **(Iqr),** und
einem Umkehr-Koordinatentransformationsabschnitt **(6)** zur umgekehrten Koordinatentransformation des d-Achsen-Spannungsbefehls **(Vdr)** und des q-Achsen-Spannungsbefehls **(Vqr)** in Drei-Phasen-Spannungsbefehle **(vur, vvr, vwr),** die den jeweiligen drei Phasen **(U-Phase, V-Phase, W-Phase)** des Synchronmotors **(I)** beaufschlagt werden, und

einem Störspannungsschätzabschnitt **(9)** zum Schätzen von Störspannungen **(Ved, Veq/ veu, vev, vew),** die in jeweiligen induzierten Spannungen **(Ed, Eq/ Eu, Ev, Ew)** enthalten sind, die durch Drei-Phasen-Antriebsspannungen induziert werden, die durch einen Umrichter (8) auf der Grundlage der jeweiligen Drei-Phasen-Spannungsbefehle **(vur, wr, vwr)** erzeugt werden, und eine Turbulenz an den Motorströmen **(iu, iv, iw)** verursachen, und zum Zuführen eines Schätzergebnisses zu dem Vektorsteuerungsabschnitt,

wobei der Störspannungsschätzabschnitt **(9)** die Störspannungen **(Ved, Veq)** durch Identifizieren einer harmonischen Komponente höherer Ordnung auf den d-Achsen- und q-Achsen-Spannungsbefehlen **(Vdr, Vqr)** schätzt, und der Umkehr-Koordinatentransformationsabschnitt **(6)** modifizierte Spannungsbefehle **(Vdr, Vqr),** die durch jeweiliges Subtrahieren der Störspannungen **(Ved, Veq)**, die in Bezug auf die Spannungsbefehle **(Vd, Vq)** vor deren Modifikation geschätzt werden, von den d-Achsen- und q-Achsen-Spannungsbefehlen **(Vd, Vq)** vor deren Modifikation erhalten werden, in die Drei-Phasen-Spannungsbefehle **(vur, vvr, vwr)** Koordinaten umgekehrt koordinatentransformiert.

2. Synchronmotorsteuerungsvorrichtung nach Anspruch 1, wobei der Störspannungsschätzabschnitt **(9)** eine harmonische Komponente höherer Ordnung als Funktion eines elektrischen Winkels (θ) des Synchronmotors **(1)** identifiziert und die Störspannungen **(Ved, Veq/ veu, vev, vew)** auf der Grundlage des elektrischen Winkels (θ) schätzt, der sich in Reaktion auf eine Rotation des Synchronmotors **(1)** ändert.

3. Synchronmotorsteuerungsvorrichtung nach Anspruch 1, wobei der Störspannungsschätzabschnitt **(9)** eine Korrelationstabelle aufweist, in der eine harmonische höhere Ordnung als ein Korrelationswert des Soll-Drehmoments **(Tr)** und des elektrischen Winkels (θ) identifiziert ist, und die Störspannungen **(Ved, Veq/ veu, vev, vew)** auf der Grundlage des Soll-Drehmoments **(Tr)** und des elektrischen Winkels (θ), der sich in Reaktion auf eine Rotation des Synchronmotors **(1)** ändert, auf der Grundlage der Korrelationstabelle schätzt.

4. Synchronmotorsteuerungsverfahren zur Ausführung einer Vektorsteuerung durch eine Koordinatentransformation von Motorströmen **(iu, iv, iw),** die jeweiligen drei Phasen **(U-Phase, V-Phase, W-Phase)** eines Synchronmotors **(1)** beaufschlagt werden, in eine Vektorkomponente **(Id)** einer d-Achse, die einer Richtung eines Magnetfeldes entspricht, das durch einen an einem Rotor des Synchronmotors **(1)** angeordneten Permanentmagneten erzeugt wird, und eine Vektorkomponente (**Iq**) einer q-Achse, die orthogonal zu der d-Achse ist, und zur Steuerung des Synchronmotors **(1)** durch eine umgekehrte Koordinatentransformation der d-Achsen- und q-Achsen-Komponenten in Drei-Phasen-Komponenten und Speisen von Ankern, die die drei Phasen des Synchronmotors **(1)** bilden, wobei das Verfahren aufweist:

   einen Strombefehlsberechnungsprozess **(S4)** zur Berechnung eines d-Achsen-Strombefehls **(Idr)** und eines q-Achsen-Strombefehls **(Iqr)** auf der Grundlage des d-Achsen-Motorstroms **(Id)** und des q-Achsen-Motorstroms **(Iq),** die jeweils vektortransformiert sind, und eines Soll-Drehmoments **(Tr),**
   einen Spannungsbefehlsberechnungsprozess **(S5/S7)** zur Berechnung eines d-Achsen-Spannungsbefehls **(Vdr)** und eines q-Achsen-Spannungsbefehls **(Vqr)** auf der Grundlage jeweils des d-Achsen-Strombefehls **(Idr)** und des q-Achsen-Strombefehls **(Iqr),**
   einen Störspannungsschätzprozess (S6) zum Schätzen von Störspannungen **(Ved, Veq/ veu, vev, vew)**, die in jeweiligen induzierten Spannungen **(Ed, Eq/ Eu, Ev, Ew)** der Anker enthalten sind und eine Turbulenz an den Motorströmen **(iu, iv, iw)** verursachen, durch Identifizieren einer harmonischen Komponente höherer Ordnung auf dem d-Achsen-Spannungsbefehlen **(Vdr)** und dem q-Achsen-Spannungsbefehl **(Vqr),**
   einen Modifikationsprozess **(S7)** zum Modifizieren des d-Achsen-Spannungsbefehls **(Vqr)** durch jeweiliges Berechnen von Differenzen zwischen den d-Achsen- und q-Achsen-Spannungsbefehlen **(Vdr, Vqr)** und den Störspannungen **(Ved, Veq),** die relativ zu den d-Achsen- und q-Achsen-Spannungsbefehlen **(Vdr, Vqr)** geschätzt werden, und
   einen der Umkehr-Koordinatentransformationsprozess **(S8)** zum umgekehrten Koordinatentransformation der modifizierten Spannungsbefehle **(Vd, Vq)** in Drei-Phasen-Spannungsbefehle **(vur, vvr, vwr).**

**Revendications**

1. Dispositif de commande de moteur synchrone, comprenant:

   une partie de commande vectorielle, comprenant:

      une partie de transformation de coordonnées (2) pour transformer les coordonnées de courants de moteur (iu, iv, iw) appliqués à trois phases respectives (phase U, phase V, phase W) d'un moteur synchrone (1) en une composante vectorielle (Id) d'un axe d, qui correspond à une direction d'un champ magnétique généré par un aimant permanent agencé à un rotor du moteur synchrone (1), et en une composante vectorielle (Iq) d'un axe q orthogonal à l'axe d;

un partie de calcul de commande de courant (4) pour calculer une commande de courant de l'axe d (Idr) et une commande de courant de l'axe q (Iqr) sur la base du courant de moteur de l'axe d respectif transformé vectoriellement (Id) et du courant de moteur de l'axe q (Iq), et un couple cible (Tr);

une partie de calcul de commande de tension (5) pour calculer une commande de tension de l'axe d (Vdr) et une commande de tension de l'axe q (Vqr) sur la base de la commande de courant de l'axe d (Idr) et de la commande de courant de l'axe q (Iqr), respectivement; et

une partie de transformation inverse de coordonnées (6) pour transformer inversement les coordonnées de la commande de tension de l'axe d (Vdr) et de la commande de tension de l'axe q (Vqr) en commandes de tension à trois phases (vur, wr, vwr) appliquées aux trois phases respectives (phase U, phase V, phase W) du moteur synchrone (I); et

une partie d'estimation de tension perturbatrice (9) pour estimer des tensions perturbatrices (Ved, Veq/ veu, vev, vew), qui sont comprises dans des tensions induites respectives (Ed Eq/ Eu, Ev, Ew) induites par des tensions de commande à trois phases générées par un inverseur (8) sur la base des commandes de tension à trois phases respectives (vur, wr, vwr) et qui provoquent une turbulence sur les courants de moteur (iu, iv, vw), et pour transmettre directement un résultat estimé à la partie de commande vectorielle,

dans lequel la partie d'estimation de tension perturbatrice (9) estime les tensions perturbatrices (Ved, Veq) en identifiant une composante harmonique d'ordre supérieur sur les commandes de tensions de l'axe d et de l'axe q (Vdr, Vqr), et la partie de transformation inverse de coordonnées (6) transforme inversement les coordonnées de commandes de tension modifiées (Vdr, Vqr) qui sont obtenues en soustrayant les tensions perturbatrices (Ved, Veq), estimées par rapport aux commandes de tension (Vd, Vq) avant d'être modifiées, des commandes de tension de l'axe d et de l'axe q (Vd, Vq), avant d'être modifiées, respectivement, en commandes de tension à trois phases (vur, wr, vwr).

2. Dispositif de commande de moteur synchrone selon la revendication 1, dans lequel la partie d'estimation de tension perturbatrice (9) identifie une composante harmonique élevée comme une fonction d'un angle électrique (e) du moteur synchrone (1) et estime les tensions perturbatrice (ved, veql veu, vev, vew) sur la base de l'angle électrique (θ) qui change en réponse à une rotation du moteur synchrone (1).

3. Dispositif de commande de moteur synchrone selon la revendication 1, dans lequel la partie d'estimation de tension perturbatrice (9) comprend une table de corrélation dans laquelle une harmonique d'ordre supérieur est identifiée comme une valeur de corrélation du couple cible (Tr) et de l'angle électrique (θ), et estime les tensions perturbatrice (Ved, veq/ veu, vev, vew) sur la base du couple cible (Tr) et de l'angle électrique (θ), qui change en réponse à une rotation du moteur synchrone (1), sur la base de la table de corrélation.

4. Procédé de commande de moteur synchrone pour exécuter une commande vectorielle en transformant les coordonnées de courants de moteur (iu, iv, iw) appliqués à trois phases respectives (phase U, phase V, phase W) d'un moteur synchrone (1) en une composante vectorielle (Id) d'un axe d, qui correspond à une direction d'un champ magnétique généré par un aimant permanent agencé à un rotor du moteur synchrone (1), et en une composante vectorielle (Iq) d'un axe q orthogonal à l'axe d, et pour commander le moteur synchrone (1) en transformant inversement les coordonnées des composantes de l'axe d et de l'axe q en composantes à trois phases et en excitant des armatures qui forment les trois phases du moteur synchrone (1), le procédé comprenant:

une étape de calcul de commande de courant (S4) pour calculer une commande de courant de l'axe d (Idr) et une commande de courant de l'axe q (Iqr) sur la base du courant de l'axe d transformé vectoriellement respectif (Id) et du courant de l'axe q (Iq), et un couple cible (Tr);

une étape de calcul de commande de tension (S5/S7) pour calculer une commande de tension de l'axe d (Vdr) et une commande de tension de l'axe q (Vqr) sur la base de la commande de courant de l'axe d (Idr) et de la commande de courant de l'axe q (Iqr), respectivement;

une étape d'estimation de tension perturbatrice (S6) pour estimer des tensions perturbatrices (Ved, Veq), qui sont comprises dans des tensions induites (Eu, Ev, Ew) des armatures et qui provoquent une turbulence sur les courants de moteur (iu, iv, iw), en identifiant une composante harmonique d'ordre supérieur sur la commande de tension de l'axe d (Vdr) et la commande de tension de l'axe q (Vqr);

une étape de modification (S7) pour modifier la commande de tension de l'axe d (Vdr) et la commande de tension de l'axe q (Vqr) en calculant des différences entre les commandes de tension de l'axe d et de l'axe q (Vdr, Vqr) et les tensions perturbatrices (Ved, Veq), estimées par rapport aux commandes de tension de l'axe d et de l'axe q (Vdr, Vqr), respectivement; et

une étape de transformation inverse de coordonnées (S8) pour transformer inversement les coordonnées des commandes de tension modifiées (Vdr, Vqr) en commandes de tension à trois phases (vur, wr, vwr).

# FIG. 1

EP 2 012 425 B1

# F I G. 2

```
              ┌──────────────┐
              │    Start     │
              └──────────────┘
                     │
                     ▼
S1  ┌──────────────────────────────────────┐
    │        Obtain iu, iv, iw, θ           │
    └──────────────────────────────────────┘
                     │
                     ▼
S2  ┌──────────────────────────────────────┐
    │         Transform uvw → d-q           │
    └──────────────────────────────────────┘
                     │
                     ▼
S3  ┌──────────────────────────────────────┐
    │         Obtain target torque Tr       │
    └──────────────────────────────────────┘
                     │
                     ▼
S4  ┌──────────────────────────────────────┐
    │   Calculate current commands Idr, Iqr │
    └──────────────────────────────────────┘
                     │
                     ▼
S5  ┌──────────────────────────────────────┐
    │ Calculate d-axis and q-axis voltages  │
    │              Vd, Vq                    │
    └──────────────────────────────────────┘
                     │
                     ▼
S6  ┌──────────────────────────────────────┐
    │ Estimate d-axis and q-axis high-order │
    │ harmonic disturbance voltages Ved, Veq│
    └──────────────────────────────────────┘
                     │
                     ▼
S7  ┌──────────────────────────────────────┐
    │  Calculate voltage commands Vdr, Vqr  │
    │             Vdr=Vd-Ved                 │
    │             Vqr=Vq-Ved                 │
    └──────────────────────────────────────┘
                     │
                     ▼
S8  ┌──────────────────────────────────────┐
    │         Transform d-q → uvw           │
    └──────────────────────────────────────┘
                     │
                     ▼
S9  ┌──────────────────────────────────────┐
    │                PWM                     │
    └──────────────────────────────────────┘
                     │
                     ▼
              ┌──────────────┐
              │    Return    │
              └──────────────┘
```

# F I G. 3 A

# F I G. 3 B

# F I G. 4

FIG. 5

FIG. 6

23

# FIG. 7

EP 2 012 425 B1

# FIG. 8

S6

```
        ┌─────────────────┐
        │      Start       │
        └─────────────────┘
                 │
                 ▼
S11  ┌──────────────────────────┐
     │  Calculate Ved            │
     │  Ved=A · ω · sin(6θ)      │
     └──────────────────────────┘
                 │
                 ▼
S12  ┌──────────────────────────┐
     │  Calculate Veq            │
     │  Veq=B · ω · cos(6θ)      │
     └──────────────────────────┘
                 │
                 ▼
        ┌─────────────────┐
        │      End         │
        └─────────────────┘
```

FIG. 9

FIG. 10

# F I G. 11 A

| Ved | | | | | | |
|---|---|---|---|---|---|---|
| Tr \ θ | 0 | 6 | 12 | · · · | 348 | 360 |
| 10 | −215 | 93 | 384 | · · · | −508 | −215 |
| 30 | 86 | 395 | 609 | · · · | −341 | 86 |
| · · · | · · · | · · · | · · · | · · · | · · · | · · · |
| 140 | 869 | 757 | 437 | · · · | 398 | 896 |
| 160 | 1176 | 996 | 553 | · · · | 481 | 1176 |

# F I G. 11 B

| Veq | | | | | | |
|---|---|---|---|---|---|---|
| Tr \ θ | 0 | 6 | 12 | · · · | 348 | 360 |
| 10 | 339 | 314 | 222 | · · · | 188 | 399 |
| 30 | 328 | 101 | −140 | · · · | 390 | 328 |
| · · · | · · · | · · · | · · · | · · · | · · · | · · · |
| 140 | −833 | −1081 | −1004 | · · · | −222 | −833 |
| 160 | −599 | −1055 | −1140 | · · · | 130 | −599 |

# F I G. 12

S6

```
        ┌─────────────┐
        │    Start    │
        └─────────────┘
               │
               ▼
S21  ┌───────────────────────┐
     │ Obtain Ved from table │
     │ (Parameter: θ, Tr)    │
     └───────────────────────┘
               │
               ▼
S22  ┌───────────────────────┐
     │ Obtain Veq from table │
     │ (Parameter: θ, Tr)    │
     └───────────────────────┘
               │
               ▼
        ┌─────────────┐
        │     End     │
        └─────────────┘
```

# FIG. 13

EP 2 012 425 B1

# F I G. 14

```
                    ( Start )
                        |
                        v
S31  ┌──────────────────────────────┐
     │   Obtain iu, iv, iw, θ        │
     └──────────────────────────────┘
                        |
                        v
S32  ┌──────────────────────────────┐
     │   Transform uvw → d-q         │
     └──────────────────────────────┘
                        |
                        v
S33  ┌──────────────────────────────┐
     │   Obtain target torque Tr     │
     └──────────────────────────────┘
                        |
                        v
S34  ┌──────────────────────────────┐
     │ Calculate current commands Idr, Iqr │
     └──────────────────────────────┘
                        |
                        v
S35  ┌──────────────────────────────┐
     │ Calculate voltage commands Vdr, Vqr │
     └──────────────────────────────┘
                        |
                        v
S36  ┌──────────────────────────────┐
     │   Transform d-q →uvw          │
     │                   ⎧ vu        │
     │   Vdr, Vqr→  ⎨ vv        │
     │                   ⎩ vw        │
     └──────────────────────────────┘
                        |
                        v
S37  ┌──────────────────────────────┐
     │ Estimate three-phase high-harmonic │
     │ disturbance voltages veu, vev, vew │
     └──────────────────────────────┘
                        |
                        v
S38  ┌──────────────────────────────┐
     │ Calculate three-phase voltage │
     │   commands vur, vvr, vwr      │
     │        vur=vu-veu             │
     │        vvr=vv-vev             │
     │        vwr=vw-vew             │
     └──────────────────────────────┘
                        |
                        v
S39  ┌──────────────────────────────┐
     │            PWM                │
     └──────────────────────────────┘
                        |
                        v
                    ( Return )
```

# F I G. 15

S37

```
        ┌─────────────┐
        │    Start     │
        └─────────────┘
               │
               ▼
S41 ┌──────────────────────┐
    │    Calculate veu      │
    └──────────────────────┘
               │
               ▼
S42 ┌──────────────────────┐
    │    Calculate vev      │
    └──────────────────────┘
               │
               ▼
S43 ┌──────────────────────┐
    │    Calculate vew      │
    └──────────────────────┘
               │
               ▼
        ┌─────────────┐
        │     End      │
        └─────────────┘
```

FIG.16

# FIG. 17

S37

```
┌─────────────────────────┐
│          Start          │
└─────────────────────────┘
             │
             ▼
┌─────────────────────────┐
│  Obtain veu from table  │  S51
│  (Parameter:  θ, Tr)    │
└─────────────────────────┘
             │
             ▼
┌─────────────────────────┐
│  Obtain vev from table  │  S52
│  (Parameter:  θ, Tr)    │
└─────────────────────────┘
             │
             ▼
┌─────────────────────────┐
│  Obtain vew from table  │  S53
│  (Parameter:  θ, Tr)    │
└─────────────────────────┘
             │
             ▼
┌─────────────────────────┐
│          End            │
└─────────────────────────┘
```

EP 2 012 425 B1

# FIG. 18

| veu | | | | | | |
|---|---|---|---|---|---|---|
| Tr \ θ | 0 | 3 | 6 | ・・・ | 357 | 360 |
| 10 | 3.4 | −3.4 | −11.7 | ・・・ | 11.7 | 3.4 |
| ⋮ | ⋮ | ⋮ | ⋮ | ⋮ | ⋮ | ⋮ |

# FIG. 19 A

Current (A)

Time

Iq

---Iq
(Target value)

# FIG. 19 B

Current (A)

Time

Id

---Id
(Target value)

**EP 2 012 425 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006320039 A
- JP 03256587 B
- JP 09215398 B